# FASCICULE DE BREVET EUROPEEN

(11) **EP 4 535 991 B1**
(45) Date de publication et mention de la délivrance du brevet: **22.04.2026**
(21) Numéro de dépôt: 23730217.9
(22) Date de dépôt: 08.06.2023
(51) Int. Cl.: A01M 7/00

(54) **SECTION DE RAMPE DE PULVÉRISATION D'UN PRODUIT SUR UNE CIBLE VÉGÉTALE, RAMPE DE PULVÉRISATION ET PULVÉRISATEUR AGRICOLE**
ABSCHNITT EINES SPRÜHAUSLEGERS FÜR DAS SPRÜHEN EINES PRODUKTS AUF EINE PFLANZE, SPRÜHAUSLEGER UND LANDWIRTSCHAFTLICHES SPRÜHGERÄT
SECTION OF A SPRAY BOOM FOR SPRAYING A PRODUCT ON A PLANT TARGET, SPRAY BOOM AND AGRICULTURAL SPRAYER

(30) Priorité: 08.06.2022 FR 2205499
(43) Date de publication de la demande: 16.04.2025
(73) Titulaire: PELLENC, 84120 Pertuis (FR)
(72) Inventeur: GAUFFRE, Pierre, 84120 PERTUIS (FR); CLOAREC, Sylvain, 84160 CADENET (FR)
(74) Mandataire: Hautier IP
(86) Numéro de dépôt international: PCT/IB2023/055941
(87) Numéro de publication internationale: WO 2023/238083

(56) Documents cités:
- EP-A1- 0 704 157
- EP-A1- 2 679 092
- AU-A1- 2009 202 946
- FR-A1- 2 989 250
- FR-A1- 3 110 335
- US-A- 5 062 572

## Description

### DOMAINE TECHNIQUE

La présente invention concerne le domaine des systèmes de pulvérisation de produits de traitement, notamment de pulvérisation de produits phytosanitaires sur des cibles végétales, par exemple des haies. Elle concerne plus précisément une section de rampe de pulvérisation d'une rampe de pulvérisation destinée à être portée par un pulvérisateur agricole et comprenant des éléments de pulvérisation d'un produit à pulvériser. Elle trouve pour application particulièrement avantageuse mais non limitative la pulvérisation d'une bouillie sur une haie de vigne.

### ETAT DE LA TECHNIQUE

Il existe plusieurs types de solutions pour pulvériser un produit sur une cible végétale.

Un premier type de système de pulvérisation utilise des jets projetés. Ces systèmes comprennent des buses qui, alimentées sous pression avec un produit à pulvériser, assurent une fragmentation du produit en gouttelettes. Les jets de produit pulvérisé sont dirigés vers la végétation à traiter sous la forme de gouttelettes de petite taille. Elles atteignent leur cible végétale grâce à leur vitesse propre. Ce système ne permet toutefois pas une répartition des gouttelettes sur toute la surface de la cible végétale, notamment en profondeur de la haie végétale et sur l'intrados des feuilles.

Un deuxième type de système de pulvérisation, qualifié de pneumatique, fonctionne sans buse de fragmentation et comprend des moyens de ventilation adaptés pour générer un flux d'air à très grande vitesse au niveau de l'arrivée du produit phytosanitaire qui se trouve alors fragmenté et réparti dans le flux d'air par la forte dépression générée par la vitesse d'air. Le flux d'air à très grande vitesse favorise ainsi un transport rapide et une pénétration des gouttelettes au sein de la végétation. Toutefois, en cas d'absence de végétation ou de faible densité de végétation, le produit phytosanitaire est propulsé à grande distance, polluant l'environnement. De fait, des panneaux récupérateurs sont le plus souvent nécessaires pour limiter la pollution environnementale.

Un troisième type de système, appelé jet porté, comprend des moyens de ventilation générant un flux d'air à fort volume combiné avec des buses de pulvérisation. Dans ce cas, les buses assurent une fragmentation des jets pulvérisés en gouttelettes orientées vers le flux d'air qui assure ainsi leur transport rapidement vers les végétaux à traiter. Ce système a l'inconvénient de ne pas répartir de façon homogène le produit sur toute la surface de la cible végétale, notamment l'intrados des feuilles, et peut polluer l'environnement en cas d'absence de cible végétale.

Il existe aussi des systèmes de pulvérisation portés à dos d'un utilisateur décrit dans le document EP2679092. Dans ce système, la buse est manipulée directionnellement à la main afin de projeter vers la végétation. La manipulation manuelle de la buse entraîne cependant une distance de projection non maîtrisée et ainsi non précise.

Le document FR3074016, complété par le document FR3074014, décrit un système de type jet porté dans lequel un flux d'air apporte un air propulseur jusqu'à une buse. La buse comporte ici d'une part un pavillon de diffusion de l'air propulseur orienté vers la cible végétale, et d'autre part un éclateur ou un gicleur pour fragmenter et diffuser le produit phytosanitaire dans l'air propulseur. La buse de ce document assure à la fois une fonction de mise en forme du flux d'air propulseur mais aussi une fonction de fragmentation du produit introduit dans le flux d'air propulseur pour être distribué vers les végétaux à traiter. La buse est montée sur un porteur de buse tel qu'une rampe, le porteur de buse pouvant comporter en outre des ouvertures aptes à générer des rideaux d'air amont et aval de part et d'autre de la buse, à distance du flux d'air propulseur et sans interagir avec ce dernier, pour écarter le feuillage et/ou récupérer d'éventuelles gouttes de liquide phytosanitaire ayant rebondi sur le feuillage. La multiplicité des flux d'air en présence nécessite toutefois des puissances importantes pour les générer.

En dépit des nombreuses solutions déjà proposées, il existe toujours un besoin consistant à rendre plus efficace la pulvérisation d'un produit sur une cible végétale

Tel est un objet de la présente invention.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un mode de réalisation on prévoit une section de rampe de pulvérisation d'un produit sur une cible végétale, par exemple une vigne. Elle pourra être désignée ci-après simplement section de rampe et comprend au moins un élément de pulvérisation, tel qu'une buse, configuré pour être fluidiquement alimenté, de préférence sous pression, en produit et pour générer, de préférence sous la forme de gouttes, un jet de produit se propageant vers la cible végétale selon un axe médian de pulvérisation. La section de rampe comprend également deux diffuseurs configurés chacun pour être alimentés par un fluide gazeux tel que de l'air et configurés chacun pour générer en sortie de diffuseur un flux d'air diffusé se propageant vers la cible végétale selon une direction de flux d'air diffusé, l'élément de pulvérisation étant situé entre les deux diffuseurs.

Selon un exemple, la section de rampe est configurée de sorte que chacun des flux d'air diffusé présente une première portion qui se propage selon sa direction de flux d'air diffusé et qui intersecte l'axe médian de pulvérisation, chacun des flux d'air diffusé présentant une deuxième portion prolongeant la première portion au-delà de l'intersection avec l'axe médian de pulvérisation.

Ainsi, selon cet exemple, chaque flux d'air diffusé présente :
- une première portion, dite portion de flux d'air porteur, convergeant en direction de l'axe médian de pulvérisation en canalisant le jet de produit, la portion de flux d'air porteur intersectant l'axe médian de pulvérisation en amont de la cible végétale,
- une deuxième portion, dite portion de collision, prolongeant la première portion au-delà de l'intersection avec l'axe médian de pulvérisation, au cours de laquelle les deux portions de flux d'air porteurs se collisionnent entre elles pour créer des turbulences et générer un flux d'air turbulent. Ce flux d'air turbulent se propage vers et au sein de la cible végétale.

Le flux de produit, centré dans la direction de l'axe médian de pulvérisation, incorpore ses gouttes progressivement dans les portions de flux d'air porteur et de façon complète dans les portions de collision.

Ainsi, la section de rampe proposée permet, grâce aux portions de flux d'air porteur convergentes vers l'axe médian de pulvérisation, de canaliser puis d'incorporer par pincement le jet de produit en amont de la cible végétale, et grâce aux portions de collision, de générer des turbulences aptes à ralentir et diffuser les gouttes de façon plus homogène en les localisant sur les différentes surfaces de la cible végétale. Ainsi, le produit phytosanitaire peut se déposer plus facilement sur les deux faces d'une feuille mise en mouvement par les turbulences, quelle que soit l'orientation de la feuille dans l'espace, mais aussi favoriser par ce mouvement la pénétration des gouttes au coeur de la cible végétale pour atteindre les fruits et les bois les supportant. Cette solution permet ainsi d'améliorer considérablement l'efficacité de la pulvérisation du produit sur la cible végétale, qu'il s'agisse d'une culture viticole, arboricole ou maraichère.

En outre, dans le cadre du développement de la présente invention, il s'est avéré que la solution proposée permet d'éviter une importante dérive du produit dans le cas de faibles surfaces à traiter dans la cible végétale, voire en cas d'absence ponctuelle de cible végétale, par exemple lors de l'absence locale de pieds de vignes dans un rang de vigne. Les portions de flux d'air porteur convergentes permettent en effet dans un premier temps de canaliser puis d'incorporer par pincement du jet de produit les gouttes émises par l'élément de pulvérisation tout en limitant l'influence des perturbations dues à la vitesse d'avancement de la section de rampe ou au vent. Puis, dans la portion de collision, les deux flux d'air diffusés génèrent des turbulences et se fondent en un flux d'air turbulent débutant de préférence en amont de la cible végétale, turbulences qui vont alors, d'une part ralentir les flux d'air diffusés et de fait la vitesse moyennes des gouttes dans la direction de l'axe médian de pulvérisation, et d'autre part faire bouger et écarter le feuillage de la cible végétale pour favoriser la pénétration et le dépôt du produit sur les différentes surfaces au sein de la cible végétale. Le ralentissement des gouttes dans la portion de collision et dans la direction de l'axe médian de pulvérisation limite ainsi leur portée au-delà de la zone théorique de présence de la cible végétale.

Dans la section de rampe proposée, les flux d'air diffusés n'agissent pas comme des rideaux d'airs indépendants aptes à récupérer d'éventuelles gouttes ayant rebondi sur la cible végétale. Les flux d'air diffusés n'agissent pas non plus comme des rideaux d'air indépendants visant à écarter le feuillage en amont de l'axe médian de pulvérisation pour favoriser le passage du jet de produit. Bien au contraire, dans le développement de la présente invention, il s'est avéré que c'est la convergence des flux d'air diffusés avec le jet de produit en amont de la cible végétale qui améliore le dépôt des gouttes de produit sur les différentes surfaces de la cible végétale et évite sa projection à distance de la cible végétale en cas d'interruption de cette dernière ou de densité trop faible. Si les flux d'air diffusé agissaient comme de simples rideaux pour écarter le feuillage sans intercepter ni ralentir le jet de produit, alors, dès lors que le matelas végétal serait interrompu ou trop clairsemé, les gouttes de produit seraient propulsées dans la direction de l'axe médian de pulvérisation bien au-delà du rang de la cible végétale compte tenu de la vitesse et de la direction imposées par le jet de produit et/ou par les flux d'air diffusés. La dissémination du produit serait alors insuffisamment contrôlée et serait nuisible à l'environnement.

En fonction du type de haie traitée, par exemple des vignes étroites ou des vignes larges, la distance de pulvérisation minimale recommandée entre un élément de pulvérisation et la cible végétale peut être différente. Chaque type de haie peut ainsi nécessiter d'adapter la géométrie des diffuseurs d'une section de rampe au type de haie à traiter de façon à ce que la portion de collision des flux d'air diffusés puisse débuter lors de l'opération de traitement de façon générale en amont de la cible végétale. Il est donc avantageux que les diffuseurs soient configurés au préalable de l'opération de traitement pour que la portion de collision débute à une distance inférieure à la distance de pulvérisation minimale recommandée, et donc théoriquement en amont de la cible végétale. La distance entre l'élément de pulvérisation et la portion de collision peut aussi ne pas être réglable mais elle est dimensionnée dans ce cas pour convenir à différents types de cibles végétales à traiter.

Un autre aspect concerne une rampe de pulvérisation, pouvant être ci-après désignée simplement par rampe, comprenant au moins une section de rampe comme indiqué ci-dessus et au moins une source en fluide pour générer un flux d'air de rampe. La rampe de pulvérisation comprend également au moins un manchon de raccordement pour relier fluidiquement la source à la au moins une section de rampe de pulvérisation, l'au moins un manchon de raccordement et l'au moins une section de rampe formant un conduit de circulation du flux d'air de rampe au sein de la rampe. Le manchon s'étend selon une direction privilégiée. L'axe de pivotement est perpendiculaire à cette direction.

Selon un exemple, la section de rampe comprend au moins un manchon de liaison relié au corps de pulvérisation, et configuré de sorte que le flux d'air de rampe circule d'une entrée de l'un du corps de pulvérisation et du manchon de liaison à une sortie de l'autre du corps et du manchon de liaison selon une direction de flux d'air de rampe.

Selon un exemple non limitatif, la source en fluide est un ventilateur. De préférence, le ventilateur est un ventilateur axial monté à une extrémité du conduit de circulation du flux d'air de rampe de la rampe. Il peut aussi être configuré pour être monté dans une partie cylindrique du conduit de circulation du flux d'air de rampe.

Un autre aspect concerne un pulvérisateur agricole, automoteur ou tracté, équipé d'au moins une rampe comme indiqué ci-dessus.

Selon un exemple non limitatif, le pulvérisateur agricole comprend au moins deux rampes, chaque rampe présentant un ventilateur dont le débit d'air peut être réglé indépendamment de celui de l'autre rampe. Ainsi, on peut régler le flux d'air de rampe délivré dans chacune des rampes de manière indépendante. Il est aussi possible d'ajuster les flux d'air diffusés délivrés par les diffuseurs de chacune des rampes, par exemple en fonction de la position de la section de rampe par rapport à la cible végétale. Par ailleurs, par rapport à une solution comprenant un unique ventilateur alimentant plusieurs rampes, la solution proposée évite d'une part les pertes de charge pour acheminer l'air entre le ventilateur et une rampe, et d'autre part évite de générer des pertes de charge différentes vers chacune des rampes, compte tenu des longueurs et des formes de conduit nécessaires pour acheminer le flux d'air de rampe. En outre, la solution proposée permet de faciliter le remplacement d'une rampe, par exemple par une rampe avec un nombre de sections de rampes différent, une rampe possédant des buses de calibre différent ou une rampe ayant un réglage différent de la distance de pulvérisation minimale recommandée, pouvant par ailleurs présenter des distances différentes entre les éléments de pulvérisation de deux sections de rampes. Selon un exemple le ventilateur est un ventilateur axial monté à une extrémité de la rampe dans l'axe de la rampe à l'aide d'un manchon de raccordement. L'axe de la rampe correspond à un axe selon lequel la rampe s'étend principalement. Le ventilateur axial peut aussi être intégré directement dans une partie cylindrique du conduit de circulation du flux d'air de rampe de la rampe.

Un autre aspect concerne un procédé de pulvérisation d'un produit sur une cible végétale utilisant au moins une section de rampe de pulvérisation d'une rampe comme indiqué ci-dessus ou un pulvérisateur agricole comme indiqué ci-dessus. Ce procédé comprend les étapes suivantes :
- On alimente sous pression l'élément de pulvérisation en produit pour générer un jet de produit se propageant vers la cible végétale selon un axe médian de pulvérisation,
- On alimente les deux diffuseurs, positionnés de part et d'autre de l'élément de pulvérisation, avec un fluide gazeux tel que de l'air pour générer en sortie de chaque diffuseur un flux d'air diffusé se propageant vers la cible végétale selon une direction de flux d'air diffusé.

De préférence, les deux diffuseurs sont alimentés de façon simultanée. L'un des deux diffuseurs peut être positionné en amont de l'élément de pulvérisation et l'autre des deux diffuseurs peut être positionné en aval de l'élément de pulvérisation selon une direction de déplacement de la rampe relativement à la cible végétale.

Chaque diffuseur est orienté pour diffuser un flux d'air diffusé convergent vers l'axe médian de pulvérisation, les deux flux d'air diffusés se rencontrant de préférence en amont de la cible végétale. De préférence les deux flux d'air diffusés se rencontrent à une distance inférieure à la distance de pulvérisation minimale recommandée.

Une première portion, dite portion de flux d'air porteur, converge vers l'axe médian de pulvérisation en canalisant le jet de produit et présente une deuxième portion, dite portion de collision, prolongeant la première portion au-delà de la rencontre entre les deux flux d'air diffusés.

Les flux d'air diffusés convergent et forment chacun un flux d'air porteur canalisant le jet de produit sur leur première portion jusqu'à leur rencontre au début de la portion de collision en amont de la cible végétale. Les flux d'air diffusés sont configurés pour accompagner dans leur première portion le jet de produit jusqu'à la cible végétale en pinçant progressivement le jet de produit puis pour générer des turbulences dans la portion de collision, ralentissant la propagation générale des gouttes dans l'axe médian de pulvérisation, répartissant et disposant les gouttes sur les différentes surfaces de la cible végétale. Ainsi, la collision entre les flux d'air diffusés et le jet de produit permet, sur une première portion du trajet des gouttes, d'acheminer ces dernières très rapidement vers la cible végétale pour éviter qu'elles ne sèchent, puis, sur une deuxième portion du trajet des gouttes, de les ralentir fortement en les réorientant dans l'espace grâce aux turbulences pour éviter leur propagation au-delà de la cible et favoriser leur application sur toutes les surfaces de la cible.

La largeur de chaque flux d'air diffusé, considérée perpendiculairement à la direction d'avancement de la rampe, à l'intersection avec l'axe médian de pulvérisation doit être au moins équivalente à la largeur du jet de produit pincé à ce niveau pour incorporer les gouttes dans la portion de collision. Ces largeurs sont mesurées dans un plan perpendiculaire à l'axe médian de pulvérisation, ce plan étant pris au niveau de la zone de collision. Typiquement cette zone est située par rapport à l'élément de pulvérisation à une distance inférieure à la distance de pulvérisation minimale recommandée entre l'élément de pulvérisation et la cible végétale.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente un exemple de pulvérisateur agricole comportant une pluralité de rampes pour pulvériser un produit sur des cibles végétales.
La figure 2 représente une rampe de pulvérisation selon un exemple de la présente invention, munie de trois sections de rampes de pulvérisation.
Les figures 3A et 3B représentent respectivement en perspective et en vue de dessus une section de rampe, ainsi que les jets de produit et les flux d'air diffusés émis par le corps de la section de rampe en direction d'une cible végétale.
La figure 3C illustre de manière schématique la propagation d'un jet de produit et de flux d'air diffusés vus de face et en coupe.
La figure 4 représente en perspective un exemple détaillé d'une section de rampe d'une rampe illustrée en figure 2.
La figure 5 représente en perspective et en coupe la section de rampe illustrée en figure 4.
Les figures 6A à 6C sont des vues en perspective et en coupe d'une section de rampe similaire à la figure 4, et permettant de visualiser plus précisément un exemple d'organes de réglage du débit des flux d'air diffusés.
Les figures 7A et 7B sont des vues en perspective de la section de rampe illustrée dans les figures 6A à 6C permettant de visualiser plus précisément un exemple de réglage d'une orientation angulaire des diffuseurs d'air.
La figure 8 est une vue en perspective et éclatée d'une rampe de pulvérisation selon un second mode de réalisation de la conduite de flux d'air de rampe.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :

Les diffuseurs sont orientés de sorte que chacun des flux d'air diffusé présente une première portion qui se propage selon sa direction de flux d'air diffusé et qui intersecte l'axe médian de pulvérisation, chacun des flux d'air diffusé présentant une deuxième portion prolongeant la première portion au-delà de l'intersection avec l'axe médian de pulvérisation.

Selon un exemple, la section de rampe de pulvérisation est configurée de sorte que l'axe médian de pulvérisation intersecte la portion de collision à une distance Db de l'élément de pulvérisation inférieure à 0.8 mètre et de préférence inférieure à 0.4 mètre. Cette distance est de préférence mesurée en sortie d'élément de pulvérisation selon l'axe médian de pulvérisation.

Selon un exemple, la section de rampe est configurée de sorte qu'un premier diffuseur diffuse le flux d'air diffusé en amont de l'élément de pulvérisation et un deuxième diffuseur diffuse le flux d'air diffusé en aval de l'élément de pulvérisation selon une direction d'avancement de la rampe de pulvérisation.

Selon un exemple, la section de rampe de pulvérisation comprend un corps, l'élément de pulvérisation et les diffuseurs sont montés en rotation sur le corps de sorte à être orientables autour d'un axe de rotation commun, l'élément de pulvérisation et les diffuseurs étant mutuellement solidaires en rotation autour de cet axe de rotation. Cet axe de rotation est qualifié d'axe de pivotement.

Selon un exemple, l'axe de pivotement est perpendiculaire à l'axe médian de pulvérisation selon lequel se propage le jet de produit.

La configuration de cet axe de pivotement permet d'orienter le jet de produit de manière précise et tout en s'adaptant aux dimensions de la haie à traiter. Cela répond à la problématique consistant à traiter une haie de manière plus efficace. Cela est particulièrement avantageux pour une section de rampe portée par un engin automoteur ou tracté. Ce type d'engin automoteur ou tracté permet de traiter une très grande longueur de haie en un temps court. En ce sens il se démarque radicalement dans son approche et dans ses objectifs d'outils portés à dos d'homme et permettant à l'utilisateur d'orienter manuellement le jet de produit vers une direction choisie de la haie. Ces outils nécessitent généralement que l'utilisateur effectue un mouvement de balayage afin de traiter toutes la surface de la haie.

Selon un exemple, l'axe de pivotement est sensiblement perpendiculaire à la direction selon laquelle s'étend le corps de pulvérisation depuis une entrée du corps jusqu'à une sortie du corps.

Selon un exemple, l'axe de pivotement est configuré pour permettre une rotation des deux diffuseurs de sorte que les flux d'air diffusés balayent un secteur angulaire, ce secteur angulaire étant contenu dans un plan, de préférence un plan vertical.

Selon un exemple, l'axe de pivotement est de préférence parallèle à une direction d'avancement privilégiée du pulvérisateur agricole.

Cette rotation permet par exemple une orientation de l'axe médian de pulvérisation dans un plan comprenant l'axe médian de pulvérisation et perpendiculaire à l'axe de pivotement, par exemple vers le haut ou vers le bas dans le cas d'une rampe de pulvérisation disposée verticalement, en conservant le positionnement relatif de l'élément de pulvérisation et des diffuseurs. Ce réglage en rotation permet d'orienter le jet de produit en fonction de la position de la cible végétale par rapport à la section de rampe. Ce réglage permet aussi d'ajuster les sections de rampe d'une même rampe pour couvrir l'ensemble de la cible végétale, cette adaptation prenant en compte la dimension de la haie à traiter ainsi que le nombre de sections de pulvérisation de la rampe. De préférence, les axes de pivotement de chaque section de rampe d'une même rampe sont parallèles et de préférence horizontaux.

Selon un exemple, la section de rampe de pulvérisation comprend une pièce de support s'étendant d'un diffuseur à l'autre et portant l'élément de pulvérisation. L'axe médian de pulvérisation est ainsi lié aux directions des flux d'air diffusés définies par les diffuseurs.

Selon un exemple, l'élément de pulvérisation est situé à égale distance des diffuseurs.

Selon un exemple, la section de rampe de pulvérisation est configurée de sorte que chacun des flux d'air diffusé intersecte l'axe médian de pulvérisation en deux zones jointives ou en une même zone, de préférence en un même point. Ainsi, les flux d'air diffusés s'intersectent mutuellement sur l'axe médian de pulvérisation. Ce mode de réalisation permet d'augmenter la portée du jet de produit sans modifier, tout du moins sans modifier significativement, sa direction. Cet avantage est encore plus significatif si les deux flux d'air diffusés présentent des débits et des angles d'incidence identiques au niveau du point d'intersection. Alternativement, la section de rampe de pulvérisation est configurée de sorte que chaque flux d'air diffusé intersecte l'axe médian de pulvérisation en deux zones distinctes, séparées l'une de l'autre. Ce mode de réalisation permet de limiter encore plus la vitesse de propagation des gouttes dans la direction de l'axe médian de pulvérisation en déviant préalablement leur trajectoire par l'orientation du premier flux d'air diffusé intersectant l'axe médian de pulvérisation avant de les incorporer dans la portion de collision.

Selon un exemple, la section de rampe comprend un corps. Le corps forme au niveau de la section de rampe une partie tubulaire présentant au moins une entrée configurée pour recevoir le flux d'air de rampe et au moins une ouverture d'alimentation des diffuseurs pour générer les flux d'air diffusés. De préférence, la partie tubulaire comprend également au moins une sortie configurée pour évacuer la partie du flux d'air de rampe non propagée par les diffuseurs. La section de rampe peut comprendre un manchon de section reprenant la partie de flux d'air de rampe non propagée par les diffuseurs pour la relier à une autre section de rampe.

Les diffuseurs sont situés de part et d'autre du corps. De préférence, ils sont situés symétriquement par rapport à un centre du corps. De préférence, les diffuseurs sont des pièces symétriques de façon à former alternativement l'un ou l'autre des diffuseurs. Cela permet de réduire le nombre de références pour réaliser une même section de rampe de pulvérisation, ce qui limite les coûts de fabrication, de logistique et de service après-vente.

Selon un exemple, au moins un diffuseur présente une extrémité proximale par laquelle il est monté en rotation sur le corps et une extrémité distale formant au moins une ouïe de sortie pour le flux d'air diffusé, le diffuseur peut en outre présenter un flasque externe, dont une paroi canalise en partie le flux d'air diffusé lors de son passage à l'intérieur du diffuseur, le flasque externe peut présenter une forme courbe tendant à rapprocher l'extrémité distale du corps. Cela permet tout d'abord de faciliter le montage des diffuseurs sur le corps et assurer le montage par l'extérieur des flasques externes tout en limitant les pertes de charges dans le diffuseur. Ensuite, cela permet d'avoir une section de rampe de pulvérisation compacte pour limiter les risques d'endommagement lors de la rencontre avec de la végétation ou des obstacles.

Selon un exemple, au moins un diffuseur présente :
- une chambre proximale s'étendant depuis l'extrémité proximale du diffuseur et en communication fluidique avec l'une des ouvertures d'alimentation du corps,
- une chambre distale s'étendant depuis la chambre proximale et jusqu'à l'ouïe de sortie du flux d'air diffusé.

Au moins la chambre distale présente plusieurs canaux configurés pour séparer le flux d'air diffusé s'écoulant dans le diffuseur en plusieurs parties de flux d'air diffusé pour limiter les interactions et donc les turbulences dans le flux d'air diffusé traversant le diffuseur, chaque canal formant une partie de flux d'air diffusé, l'une des parties au moins de la première portion de flux d'air porteur étant destinée à intersecter l'axe médian de pulvérisation, les autres parties étant orientées selon des directions privilégiées, de préférence non parallèles entre elles mais aussi à l'axe médian de pulvérisation, sensiblement en forme d'éventail de façon à former ensemble une barrière, au moins latérale, au jet de pulvérisation. Au moins deux canaux adjacents canalisent leurs parties de flux d'air diffusé respectives selon des directions privilégiées non parallèles. Cela permet toutefois de former la portion de flux d'air porteur avec des vitesses d'air homogènes, limitant les pertes d'énergie dues à des turbulences internes au flux d'air diffusé.

Selon un exemple, la chambre distale présente un canal central et deux canaux périphériques créant des parties de flux d'air diffusé du flux d'air diffusé, s'étendant à partir de chaque canal, la partie de flux d'air diffusé centrale issue du canal central intersectant au moins l'axe médian de pulvérisation et l'ensemble des parties de flux d'air diffusé formant le flux d'air diffusé et constituant une barrière latérale au jet de produit.

Selon un exemple, le corps est rigide. En particulier, il présente une rigidité suffisante pour ne pas être déformable manuellement.

Selon un exemple, le corps est réalisé en deux parties symétriques l'une de l'autre. L'assemblage en deux parties présente l'avantage de faciliter le montage des diffuseurs et de l'élément de pulvérisation.

Selon un exemple, la section de rampe de pulvérisation est munie d'un support de pulvérisation pour positionner un élément de pulvérisation de rechange disposé sur le corps.

Selon un exemple, la section de rampe de pulvérisation comporte un dispositif de réglage du flux d'air diffusé en sortie de diffuseur. De préférence, le dispositif de réglage comporte au moins un volet monté mobile à l'intérieur du corps et configuré pour faire varier, en fonction de sa position dans le corps, la portion du flux d'air de rampe présente dans l'intérieur du corps et qui parvient dans au moins un diffuseur par les ouvertures d'alimentation. Selon un exemple, le volet est configuré pour limiter la portion de flux d'air de rampe dérivée en direction de l'ouverture d'alimentation par les ouvertures d'alimentation. Selon un exemple, le volet admet une position d'obturation dans laquelle il empêche le flux d'air de rampe présent dans l'intérieur du corps de parvenir dans au moins un diffuseur. De préférence, la section de rampe de pulvérisation comprend un volet pour chaque diffuseur.

Selon un exemple, la section de rampe de pulvérisation comprend un organe de réglage manipulable par un utilisateur depuis l'extérieur du corps et configuré pour faire varier la position de l'au moins un volet. De préférence un unique organe de réglage fait varier la position des volets associés à l'ensemble des diffuseurs de la section de rampe.

Selon un exemple, la section de rampe de pulvérisation comprend un corps, le corps forme au niveau de la section de rampe une partie tubulaire présentant au moins une entrée et au moins une sortie entre lesquelles circule le flux d'air de rampe, et au moins une ouverture d'alimentation des diffuseurs pour générer les flux d'air diffusés, la section de rampe de pulvérisation est en outre configurée pour supporter un conduit principal d'alimentation de l'élément de pulvérisation en produit, le conduit principal traverse au moins une entrée et une sortie du corps. Alternativement, le conduit d'alimentation principal est logé à l'intérieur d'un logement formé sur une face externe du corps. Dans ce cas, de préférence le conduit principal ne forme pas saillie au-delà de la face externe du corps. Ces modes de réalisation présentent pour intérêt de protéger le conduit à l'intérieur de la section de rampe. On évite ainsi les risques d'arrachage du conduit, voire de percement au contact de la végétation ou d'autres obstacles.

Naturellement, il ressort clairement que les caractéristiques relatives à la présence et à la disposition du conduit d'alimentation principal peuvent être exploitées et revendiquées indépendamment des caractéristiques relatives aux portions de flux d'air qui intersectent l'axe médian de pulvérisation ainsi qu'aux caractéristiques relatives à l'axe de pivotement.

Alternativement, la section de rampe de pulvérisation est configurée de sorte que le conduit soit connecté à l'élément de pulvérisation en passant par l'extérieur de la partie tubulaire du corps. Cela permet de rendre accessible les raccords d'alimentation de l'élément de pulvérisation et de vérifier l'occurrence d'éventuelles fuites.

Selon un exemple, la section de rampe de pulvérisation comprend un corps et peut comprendre en outre un manchon de liaison relié au corps, l'air circulant d'une entrée de l'un du corps et du manchon de liaison à une sortie de l'autre du corps et du manchon de liaison, une partie du flux d'air de rampe étant déviée vers les diffuseurs. Le manchon de liaison est ensuite relié à une autre section de rampe de pulvérisation en définissant une distance entre deux buses d'une même rampe. Le manchon de liaison peut être rigide ou souple.

Selon un exemple, le jet de produit présente, en coupe dans un plan perpendiculaire à l'axe médian de pulvérisation, une section pleine ou annulaire. Le jet de produit peut aussi présenter, en coupe dans un plan perpendiculaire à l'axe médian de pulvérisation, un pourtour circulaire, elliptique, ou polygonal dépendant de l'ajutage du type d'élément de pulvérisation utilisé. La section du jet de produit, prise en coupe dans un plan perpendiculaire à l'axe médian de pulvérisation et en l'absence de la portion de flux d'air porteur est généralement croissante le long de l'axe médian de pulvérisation en s'éloignant de l'élément de pulvérisation, au moins sur une portion de cet axe médian, de préférence sur au moins un mètre. La pulvérisation est par exemple sous forme de gouttes. Les flux d'air diffusés sont configurés pour intersecter et incorporer les gouttes du jet de produit le long de la portion de flux d'air porteur et au pire dans la portion de collision.

Selon un exemple, la section de rampe de pulvérisation présente un corps creux formant une pièce monolithique. Le manchon se connecte fluidiquement de manière amovible au corps. Selon une alternative, la section de rampe comporte deux portions, formant chacune une partie du manchon et une partie du corps de pulvérisation, la coopération de ces deux portions définissant un conduit de circulation du flux d'air de rampe en formant le manchon et le corps de pulvérisation. Selon un exemple chaque portion forme une demi-coquille. De préférence, les deux portions sont identiques. Cela permet de réduire le nombre de références pour réaliser un même corps de pulvérisation ce qui limite les coûts de fabrication et de logistique.

Selon un exemple, le manchon de liaison est souple, de préférence le manchon de liaison est suffisamment souple pour se déformer sous l'effet du poids d'au moins trois sections de rampe et de préférence sous l'effet du poids d'au moins une section de rampe. Typiquement, le manchon est suffisamment souple pour se déformer sous l'effet de son propre poids lorsqu'il présente une longueur supérieure à 0.5 mètre. Ainsi, la rampe peut se déformer lorsqu'elle rencontre un obstacle ce qui réduit considérablement les risques de casse. En outre, la souplesse des manchons permet à la rampe de conserver une orientation sensiblement verticale, quelle que soit la déclivité du terrain, ce qui permet de pulvériser avec plus de précision la cible végétale.

Selon un exemple, en utilisation, la rampe s'étend principalement selon une direction verticale.

Selon un exemple, la rampe comprend au moins deux sections de rampe, et de préférence au moins trois sections de rampe, reliées entre elles par leur manchon de liaison et disposées en série de sorte qu'une partie du flux d'air de rampe alimentant une première section de rampe de pulvérisation la traverse jusqu'à la dernière section de rampe en alimentant au passage les différents diffuseurs.

Selon un exemple, chaque section de rampe de pulvérisation est montée de manière amovible sur la rampe. Cela permet d'adapter aisément la configuration de la rampe (par exemple le nombre et la disposition des sections de rampes sur une même rampe) en fonction de la cible végétale et de la quantité de traitement à pulvériser. En outre, en cas de défaillance d'une section de rampe, elle peut être aisément remplacée sans avoir à changer l'intégralité de la rampe.

Selon un exemple, l'élément de pulvérisation génère un jet de produit sous la forme de gouttes. Selon un exemple, l'élément de pulvérisation émet de façon générale un jet de produit conçu pour s'évaser, en l'absence de flux d'air diffusé, dans une plage angulaire verticale de l'ordre de 80 à 90 degrés dans le cas d'une rampe disposée verticalement. Cela conduit ainsi à balayer le matelas végétal sur une largeur définie par cette plage angulaire combinée à la distance entre la sortie de l'élément de pulvérisation et la cible végétale à traiter. De fait, pour couvrir l'ensemble de la cible végétale, plusieurs buses sont nécessaires de façon superposée, d'où la nécessité de positionner au minimum deux buses et le plus souvent trois ou quatre, voire plus en fonction du type de conduite du vignoble ou de la haie à traiter.

Selon un exemple, le pulvérisateur est configuré de sorte que l'axe médian de pulvérisation intersecte les flux d'air diffusés à une distance Db de l'élément de pulvérisation, avec Db ≤ Dr, Dr étant une distance de pulvérisation minimale recommandée par le constructeur, mesurée selon l'axe médian de pulvérisation entre l'élément de pulvérisation et la cible végétale.

Les termes « sensiblement », « environ », « de l'ordre de » signifient « à 10% près, de préférence à 5% près » ou, lorsqu'il s'agit d'une orientation angulaire, « à 10° près ». Ainsi, une direction sensiblement normale à un plan signifie une direction présentant un angle de 90±10° par rapport au plan.

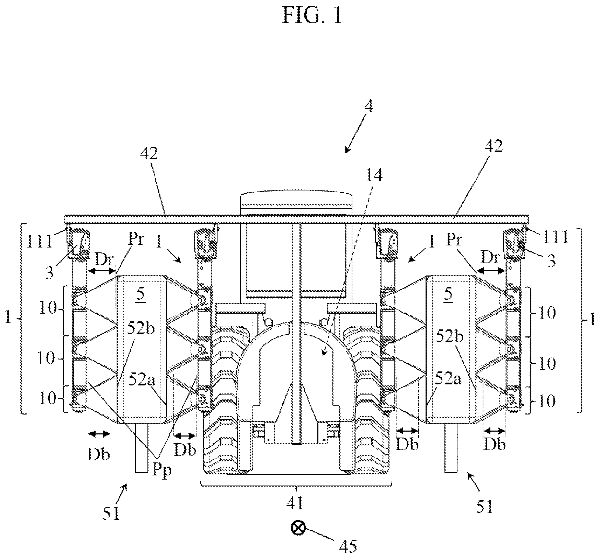

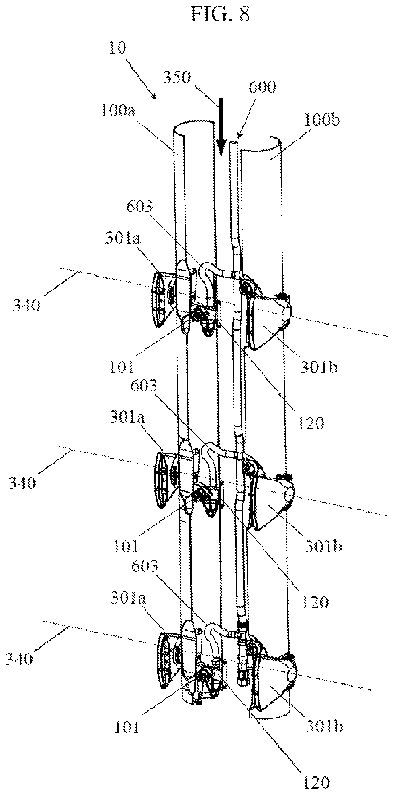

Un exemple de réalisation de la présente invention va maintenant être décrit en référence aux figures 1 à 7B dans un premier mode et en référence avec la figure 8 dans un second mode de réalisation.

La figure 1 illustre une vue arrière d'un pulvérisateur agricole 4 en cours de travail. Ce pulvérisateur agricole 4 comprend une structure porteuse 41 munie d'organes de déplacement tels que des roues ou des chenilles. Le pulvérisateur agricole 4 comprend au moins deux bras 42 qui s'étendent de chaque côté de la structure porteuse 41. Chaque bras 42 supporte deux rampes de pulvérisation 1 destinées à pulvériser un produit, par exemple un produit phytosanitaire tel qu'une bouillie, sur une cible végétale 5 telle qu'une haie 51. La bouillie est stockée dans un réservoir 14 et acheminée vers les rampes de pulvérisation 1 au moyen de canalisations non représentées sur la figure 1. Ces rampes de pulvérisation 1 sont suffisamment espacées pour être déplacées selon une direction d'avancement privilégiée 45 le long de la cible végétale 5 en pulvérisant le produit sur deux faces 52a, 52b opposées de la cible végétale 5. Elles sont configurées par le constructeur pour pulvériser le produit à une distance minimale de pulvérisation recommandée Dr à partir de l'émission du jet de produit, cette distance Dr permettant d'assurer un balayage complet de la cible végétale par l'ensemble des éléments de pulvérisation de la rampe. De fait, les rampes sont configurées pour que cette distance minimale soit respectée dans des conditions de travail normales (hors écarts de conduite du véhicule tracteur par exemple).

Naturellement, le pulvérisateur agricole illustré en figure 1 est un exemple non limitatif. L'invention s'étend à des pulvérisateurs agricoles qui ne comprennent qu'une seule rampe de pulvérisation 1 ou qui comprennent plus de deux rampes sur chaque bras. Il s'étend aussi à des pulvérisateurs agricoles nécessitant de disposer les rampes de pulvérisation de façon horizontale (pour traiter des cultures maraichères par exemple) ou inclinées par rapport à l'horizontale (pour traiter des haies arboricoles par exemple).

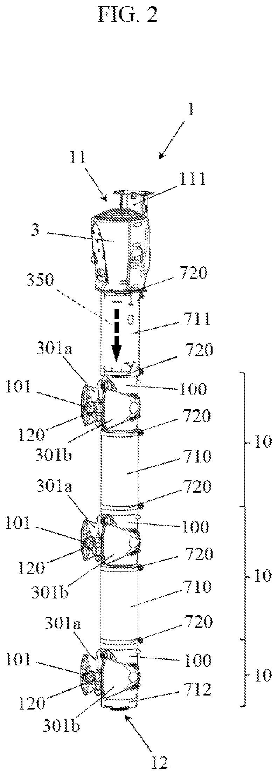

La rampe de pulvérisation 1 est illustrée en figure 2.

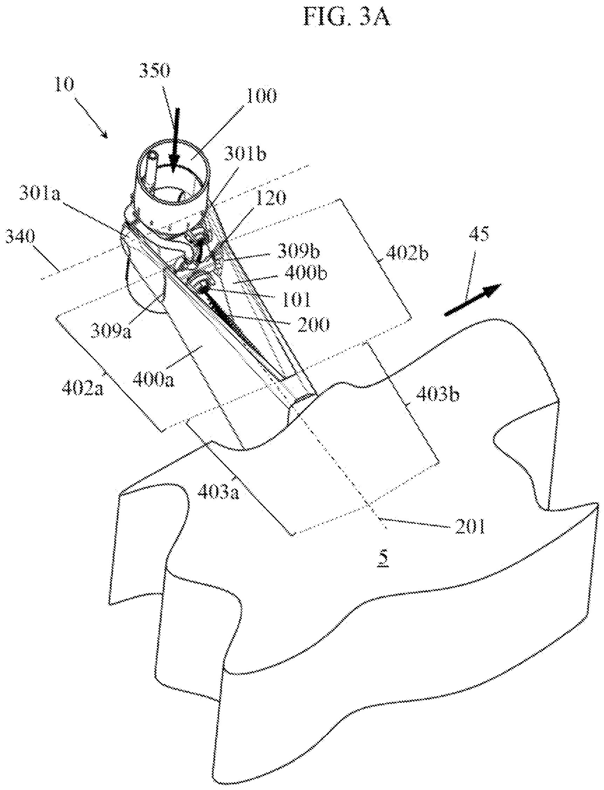

La rampe de pulvérisation 1 s'étend depuis une extrémité proximale 11 jusqu'à une extrémité distale 12. Sur l'exemple illustré, l'extrémité proximale 11 est munie d'un organe de fixation 111 destiné à fixer la rampe à un bras 42 du pulvérisateur agricole 4. La rampe 1 comprend trois sections de rampe 10, chacune comprenant un corps de pulvérisation 100 supportant des moyens de pulvérisation tels qu'un élément de pulvérisation 101 configuré pour émettre un jet de produit ainsi que deux diffuseurs 301a, 301b de flux d'air diffusé. Ce corps de pulvérisation 100 sera décrit en détail en référence aux figures 3A à 7B. Le corps de pulvérisation 100 associé à ses moyens de pulvérisation est configuré pour pulvériser un produit sur une zone donnée de la cible végétale 5.

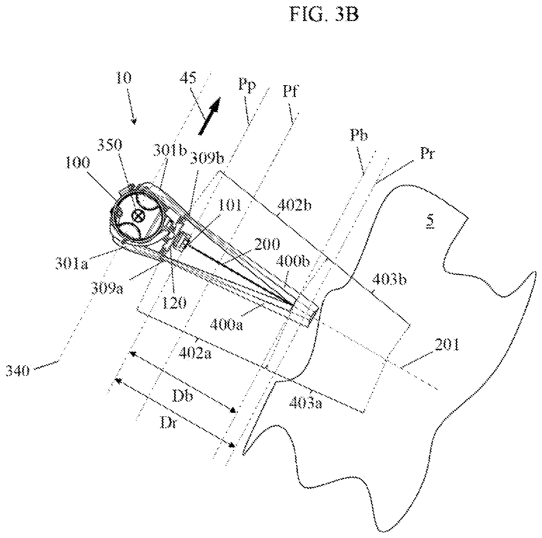

L'élément de pulvérisation délivre un jet de produit 200 sous la forme de gouttes, présenté dans les figures 3A et 3B. Dans l'exemple retenu, l'élément de pulvérisation est une buse 101 alimentée par un produit sous pression. La buse comporte de façon connue un ajutage qui, combiné à la pression donnée au produit, génère un jet de gouttes dirigé dans une direction perpendiculaire à l'ajutage et dans une forme liée à la géométrie de l'ajutage. Cet élément de pulvérisation pourrait aussi consister en une simple sortie de liquide qui serait éclatée en gouttes par l'intermédiaire d'un flux d'air spécifique, ou en une buse électriquement pilotée délivrant par exemple un jet de produit de façon pulsée. Par souci de concision, dans la suite de la description l'élément de pulvérisation à la source du jet de produit sera qualifié de buse 101 quel que soit son type.

La section de rampe 10 comprend également un manchon de liaison 710 reliant entre elles deux sections de rampe ou un bouchon de rampe 712 lorsque la section de rampe est située à l'extrémité 12 de la rampe. Les dimensions des manchons de liaison 710 ne sont pas forcément d'égale longueur, leur longueur pouvant être adaptée de façon à configurer la disposition des corps de pulvérisation en adéquation avec la cible végétale à traiter.

La section de rampe située à l'extrémité 11 de la rampe est reliée à un manchon de raccordement 711. La liaison en série du manchon 711 avec les sections de rampe 10 forme un conduit de circulation pour un flux d'air de rampe.

Les manchons de liaison 710 et de raccordement 711 sont de préférence réalisés dans une matière souple, par exemple un tissu pourvu d'un revêtement étanche ou une bâche PVC. La liaison de ces manchons 710, 711 avec les corps de pulvérisation 100 est elle aussi rendue suffisamment étanche pour limiter les pertes de flux d'air de rampe dans le conduit de circulation, par l'intermédiaire d'un collier 720 par exemple pour rendre cette liaison aisément démontable. La caractéristique souple des manchons permet à la rampe de se déformer lors du contact avec un obstacle rigide en évitant ainsi des dommages critiques. Les manchons peuvent toutefois être réalisés dans une matière rigide, permettant alors une manipulation plus facile de la rampe lors de son assemblage ou de son montage sur le pulvérisateur agricole, ainsi que son positionnement dans une position horizontale ou inclinée où il est difficile de supporter des déformations dues au poids de la rampe. La rampe est connectée fluidiquement à une source de flux d'air de rampe, et de préférence comprend dans l'exemple illustré la source de flux d'air de rampe telle qu'un ventilateur 3. De préférence il s'agit d'un ventilateur axial animé par un moteur électrique. Le ventilateur 3 est configuré pour générer à l'intérieur du conduit de circulation de la rampe 1 un flux d'air de rampe 350 dont la pression et le débit sont définis par les caractéristiques du ventilateur axial et l'aérodynamique du conduit de circulation. Le ventilateur 3 est logé à l'intérieur d'un boitier fluidiquement connecté au manchon de raccordement 711 de la rampe 1. Le ventilateur 3 peut également être monté axialement à l'intérieur du conduit de circulation de la rampe 1, et de préférence à l'intérieur du manchon de raccordement 711.

Fonction et structure du corps de pulvérisation 100

La fonction et la structure de la partie de la section de rampe 10 assurant la pulvérisation va maintenant être décrite en détail en référence aux figures 3A à 7B dans lesquelles il ne sera pas fait référence au manchon de raccordement, aux manchons de liaison ou au bouchon de rampe de la section de rampe, ces derniers éléments exerçant une fonction de liaison et/ou de conduit de flux d'air de rampe entre les parties de section de rampe assurant la fonction de pulvérisation.

La section de rampe 10 comporte un corps de pulvérisation 100 qui a pour fonction de servir de structure de support aux moyens de pulvérisation, notamment à la buse 101, aux diffuseurs 301a, 301b ainsi qu'aux moyens d'alimentation et de réglage des flux d'air diffusés 400a, 400b et du jet de produit 200 qui leurs sont associés.

La buse 101 est configurée de sorte que le jet de produit 200 se propage vers la cible végétale 5 selon un axe médian de pulvérisation 201 plus précisément illustré en figures 3A à 5, indiquant une direction moyenne de propagation du jet de produit, ceci que le jet de produit s'évase ou non à mesure qu'il s'éloigne de sa source.

Dans l'exemple des figures 3A et 3B, l'axe médian de pulvérisation est sensiblement perpendiculaire à la direction d'avancement privilégiée 45. L'axe médian de pulvérisation peut toutefois être orienté différemment vers la cible végétale en présentant un angle différent de 90 degrés avec la direction d'avancement privilégiée, cette orientation étant faite par l'utilisateur avant utilisation de la rampe par un réglage approprié de l'orientation de la rampe ou de chaque section de rampe de la rampe indépendamment l'une de l'autre.

Les deux ensembles diffuseurs 301a, 301b liés au corps de pulvérisation 100 sont alimentés par un gaz, typiquement de l'air, provenant du flux d'air de rampe 350 du ventilateur de la rampe. Chaque diffuseur 301a, 301b est configuré pour générer en sortie 309a, 309b de diffuseur 301a, 301b un flux d'air diffusé 400a, 400b se propageant vers la cible végétale 5 et convergeant vers l'axe médian de pulvérisation 201.

La section de rampe 10 est configurée pour pulvériser le produit à une distance minimale de pulvérisation recommandée Dr entre la sortie de produit de la buse et la cible végétale. Cette distance Dr, figurée seulement dans les figures 1 et 3B, est la distance séparant un plan Pp passant par la sortie de la buse et perpendiculaire à l'axe médian de pulvérisation d'un plan Pr, parallèle au plan Pp. Cette distance minimale de pulvérisation recommandée Dr est donc indicative, habituellement communiquée par le constructeur de la rampe, pour diffuser le produit sur la cible végétale de façon à la balayer sur l'intégralité de sa surface. Le plus souvent, la cible végétale se trouve à une distance de la buse supérieure à Dr le long de l'axe médian de pulvérisation pour garantir un bon balayage de la surface à pulvériser et pour tenir compte d'éventuels écarts de conduite. Dans les figures 1 et 3B, l'axe médian de pulvérisation 201 est dans cet exemple quasiment perpendiculaire à la cible végétale 5, et de fait les plans Pp et Pr sont quasiment parallèles à la cible végétale à traiter. Comme il a déjà été précisé ci-dessus l'axe médian de pulvérisation peut être réglé angulairement vers l'amont ou vers l'aval de la cible végétale en référence à la direction d'avancement privilégiée, et on verra ci-après qu'il peut être aussi réglé angulairement par rapport à la direction de flux d'air de rampe 350 de la rampe. De fait la plans Pp et Pr ne sont pas systématiquement positionnés parallèlement à la cible végétale et peuvent en outre présenter des positions différentes d'une section de rampe à une autre, ces plans ainsi que la distance Dr étant référencés par rapport à l'axe médian de pulvérisation 200 de chaque élément de pulvérisation 101.

La buse 101 est située entre les deux diffuseurs 301a, 301b, de préférence selon une direction d'avancement privilégiée 45 du pulvérisateur agricole 4. Cette direction privilégiée 45 est illustrée en figure 1, 3A et 3B et, dans cet exemple, le diffuseur 301b diffuse son flux d'air diffusé 400b en amont du jet de produit 200 alors que le diffuseur 301a diffuse son flux d'air diffusé 400a en aval du jet de produit 200. La convergence des flux d'air diffusés 400a et 400b permet ainsi de canaliser le jet de produit et d'assurer un pincement de celui-ci jusqu'à la collision des flux d'air diffusé de façon à incorporer les gouttes du jet de produit dans les flux d'air diffusé.

La section de rampe 10 est configurée de sorte que chacun des flux d'air diffusés 400a, 400b présente :
- une première portion 402a, 402b, dite portion de flux d'air porteur, convergeant l'une vers l'autre et vers l'axe médian de pulvérisation 201. Les deux premières portions 402a, 402b canalisent le jet de produit 200 jusqu'à leur intersection, intervenant en amont du plan Pr. Elles étranglent le jet de produit 200 jusqu'à leur intersection. On peut également qualifier cet étranglement de pincement. En effet l'enveloppe externe formée par le jet de produit 200, par exemple un cône, se trouve déformée sous l'effet des deux premières portions 402a, 402b. Chaque flux d'air diffusé 400a, 400b dans ces portions est configuré pour forcer la déviation de la direction des gouttes du jet de produit 200 dans la direction du flux d'air diffusé. Typiquement chaque flux d'air diffusé 400a, 400b dans ces portions possède en effet une vitesse d'air suffisante pour forcer la déviation de la direction des gouttes du jet de produit 200 dans la direction du flux d'air diffusé. Dans cette première portion, les deux flux d'air diffusés incorporent ainsi les gouttes du jet de produit 200 pour les porter vers la cible végétale 5.

-une deuxième portion 403a, 403b, dite portion de collision, est située au-delà de l'intersection des deux premières portions 402a, 402b des flux d'air diffusés 400a, 400b.

Pour reproduire ces caractéristiques, l'homme du métier a uniquement besoin de régler la portée et les orientations respectives de ces deux flux d'air de sorte à créer cette intersection, ce qu'il fera sans aucune difficulté.

La section de rampe 10 permet ainsi de canaliser et transporter le jet de produit 200 au plus près de la cible végétale 5 et, par la collision des flux d'air diffusés 402a, 402b en amont du plan Pr, donc théoriquement avant d'atteindre la cible végétale 5, de ralentir et disperser les gouttes de façon plus homogène dans l'espace pour les répartir sur les différentes surfaces de la cible végétale 5. Par ailleurs, cette collision évite une dérive du produit si la cible végétale est peu dense ou discontinue, les gouttes ayant une vitesse moyenne, en projection sur l'axe médian de pulvérisation 201, atténuée dans la portion de collision et insuffisante pour leur faire franchir une distance bien supérieure à celle de la haie. L'invention permet ainsi de rationaliser la consommation de produits et d'éviter sa dissémination incontrôlée en dehors de la cible végétale 5.

En outre la canalisation convergente préalable du jet de produit 200 par les deux flux d'air diffusés 400a, 400b dans la portion de flux d'air porteur 402a, 402b permet de limiter l'influence des perturbations dues au vent ou à la vitesse d'avancement de la section 10 de rampe 1.

Le module de pulvérisation 100 est configuré de sorte que la propagation convergente de chacun des flux d'air diffusé 400a, 400b intersecte l'axe médian de pulvérisation 201 à une distance de la buse Db mesurée selon l'axe médian de pulvérisation 201, au niveau d'un plan Pb parallèle au plan Pp à une distance inférieure à la distance Dr de sorte que les portions de collision d'air turbulent 403a et 403b balayent la cible végétale 5. De préférence Db est inférieure ou égale à 0.8 mètre et de préférence inférieure ou égale à 0.4 mètre.

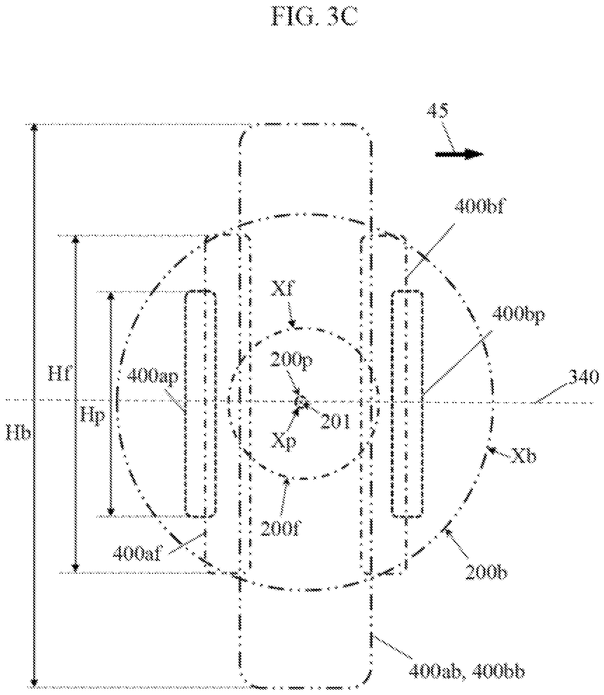

La figure 3C illustre en vue de face un exemple simplifié de façon schématique de la propagation des flux d'air diffusés 400a, 400b et celle du jet de produit 200 selon l'axe médian de pulvérisation 201, dans trois plans illustrés dans la figure 3B: les plans Pp et Pb préalablement définis ainsi qu'un plan de propagation Pf intermédiaire, parallèle aux plans Pp et Pb. Pour simplifier, la forme des flux d'air diffusés 400a et 400b intersectant un même plan est présenté sous une forme rectangulaire pour illustrer un exemple de jet d'air aplati se propageant en éventail, et la forme du jet de produit est présentée de façon circulaire pour simuler un exemple de jet conique, chaque cercle représentant l'intersection théorique du jet de produit avec le plan concerné sans tenir compte de la présence des flux d'air diffusés.

Au niveau du plan Pp, le jet de produit est diffusé selon l'axe médian de pulvérisation initialement à l'intérieur d'un cercle 200p ayant un diamètre Xp. Les flux d'air diffusés intersectent le plan Pp à distance du jet de produit 200p et sont inscrits dans des formes rectangulaires allongées 400ap, 400bp ayant une largeur Hp de dimension bien supérieure à Xp. Les deux flux d'air diffusés n'intersectent pas à ce niveau le jet de produit.

Au niveau du plan intermédiaire Pf, le jet de produit intersecte ce plan au sein d'un cercle 200f, de diamètre Xf, toujours centré sur l'axe médian de pulvérisation 201. Les deux flux d'air diffusés ayant une orientation convergente sont désormais plus proches de l'axe médian de pulvérisation. Ils sont inscrits dans cet exemple dans des formes rectangulaires 400af, 400bf de taille Hf supérieure à la taille Hp lors de l'émission, taille toujours supérieure au diamètre Xf du jet de produit. Toutefois, à ce niveau, des premières gouttes du jet de produit ont déjà rencontré le flux d'air diffusé, la distance entre les deux flux d'air diffusés étant inférieure au diamètre Xf qu'aurait le jet de produit sans la présence des flux d'air diffusés.

Au niveau du plan Pb, les deux flux d'air diffusés font leur jonction dans la forme rectangulaire 400ab, 400bb, en ayant progressivement pincé et incorporé l'ensemble du jet de produit, qui serait inscrit en l'absence de flux d'air diffusés dans le cercle 200b de diamètre Xb. La taille Hb du flux d'air diffusé à ce niveau est supérieure au diamètre théorique Xb du faisceau de façon à incorporer les gouttes du jet de produit. Cette jonction convergente des deux flux d'air diffusés associée aux gouttes du jet de produit va alors générer par la suite un flux de collision turbulent.

Comme illustré dans les figures 3A et 3B, la section de rampe 10 est configurée de sorte que les flux d'air diffusés 400a, 400b intersectent l'axe médian 201 de pulvérisation en deux zones jointives ou en une même zone. Ce mode de réalisation permet d'augmenter la portée du jet de produit 200 sans modifier, tout du moins sans modifier significativement, sa direction. Cet avantage est encore plus significatif si les deux flux d'air diffusés 400a, 400b présentent des débits et des angles d'incidence identiques.

Alternativement, la section de rampe 10 est configurée de sorte que les flux d'air diffusés intersectent l'axe médian 201 de pulvérisation en deux zones non jointives, séparées l'une de l'autre. Cet effet est obtenu en donnant un angle de convergence différent entre chaque diffuseur 301a, 301b et l'axe médian de pulvérisation 201. Ainsi, l'intersection des flux d'air diffusés 400a, 400b n'a pas lieu au niveau de l'axe médian de pulvérisation. Cela a pour effet, en plus du ralentissement du jet de produit par les turbulences, d'accentuer encore le ralentissement en déviant le jet de produit de sa trajectoire principale.

### Section de rampe 10

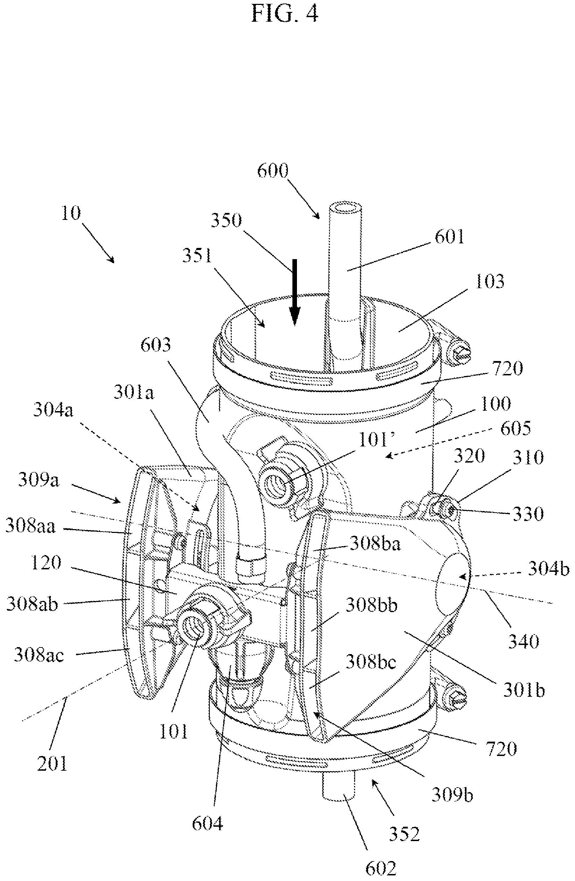

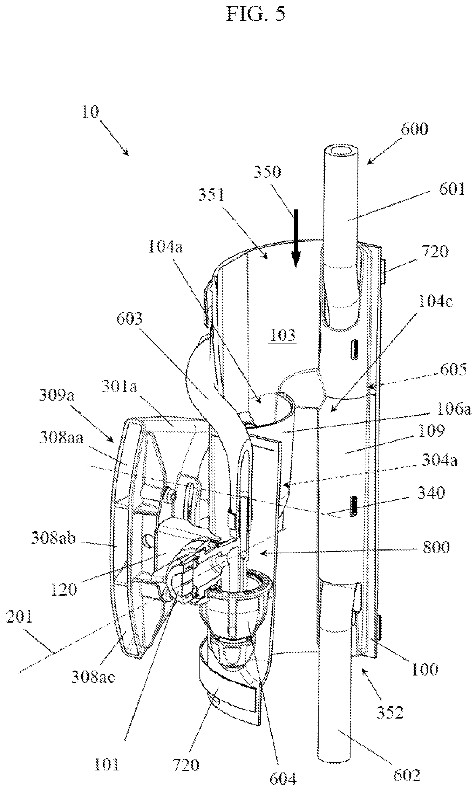

En référence aux figures 4 et 5 la section de rampe 10 va maintenant être décrite plus en détail.

La section de rampe 10 comprend un corps de pulvérisation 100, une buse 101 et des diffuseurs 301a, 301b. De préférence, le corps de pulvérisation 100 est rigide, c'est-à-dire qu'il ne se déforme pas manuellement de façon à supporter les moyens de pulvérisation associés à la section de rampe 10. De préférence également, le corps de pulvérisation 100 est tubulaire. Il présente une entrée de corps 351, une sortie de corps 352 et peut être traversé par le flux d'air de rampe 350. Une portion tubulaire 103 s'étend depuis l'entrée de corps 351 jusqu'à la sortie de corps 352. L'entrée 351 est configurée pour être fluidiquement raccordée à un manchon de raccordement 711, par exemple avec un collier de serrage 720 si le manchon est souple, s'il est relié au ventilateur de la rampe, ou à un manchon de liaison 710, avec là aussi un collier de serrage 720 si le manchon est souple, d'une autre section de rampe, les manchons n'étant pas représentés sur les figures. Il en est de même pour la sortie de corps 352 qui peut être fluidiquement raccordée à un manchon de raccordement 710 ou à un bouchon de rampe 712 s'il s'agit de la dernière section de rampe de la rampe. Ainsi, le flux d'air de rampe 350 généré par le ventilateur 3 se propage dans la portion tubulaire 103 du corps de pulvérisation 100, ce qui permet de se passer d'une canalisation dédiée pour le flux d'air de rampe parcourant la rampe 1. Cela permet en premier lieu d'avoir un ensemble compact, facilement configurable au niveau du nombre de sections de rampe et de la distance entre chaque section de rampe mais aussi d'augmenter la robustesse et la fiabilité de la rampe.

### Diffuseurs 301a, 301b

Le corps de pulvérisation 100 présente deux ouvertures 304a, 304b à travers la paroi de la portion tubulaire 103, associées respectivement à l'un des diffuseurs 301a, 301b.

Chaque diffuseur 301a, 301b présente une entrée fluidiquement couplée à une ouverture 304a, 304b qui lui est associée et une section de guidage conformée pour guider la partie du flux d'air de rampe 350 depuis l'ouverture 304a, 304b jusqu'à une ouïe de sortie 309a, 309b du diffuseur 301a, 301b. La section de guidage est de préférence tubulaire ce qui permet de guider le flux d'air diffusé plus efficacement.

Les diffuseurs 301a, 301b sont situés de part et d'autre de la buse 101 par rapport à un plan médian comprenant l'axe médian de pulvérisation 201 et la direction du flux d'air de rampe 350. De préférence, les diffuseurs 301a, 301b sont situés à égale distance de la buse 101.

De préférence, les diffuseurs 301a, 301b sont identiques et formés d'une seule pièce. Ainsi, une même pièce peut être utilisée pour alternativement l'un ou l'autre des diffuseurs. Cela permet de réduire le nombre de références pour réaliser une même section de rampe ce qui limite les coûts de fabrication et de logistique.

Les diffuseurs 301a, 301b, présentent au moins une excroissance de fixation 310 comportant une lumière 320 permettant une fixation sur le corps de pulvérisation 100 par l'intermédiaire de vis 330, la lumière 320 autorisant la fixation angulaire du diffuseur sur le corps avec une latitude de pivotement autour d'un axe de pivotement 340.

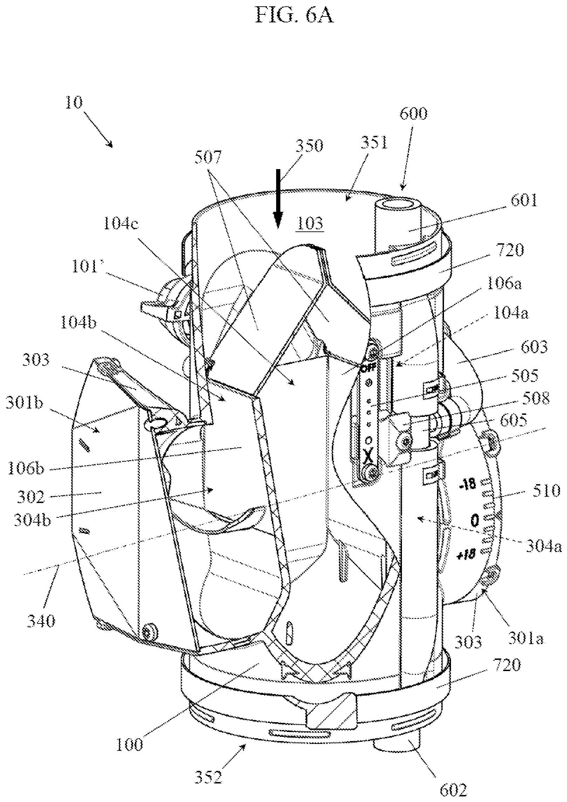

Les figures 6A à 6C présentent un autre mode de réalisation des diffuseurs réalisés en deux parties et comportant un corps de diffuseur 303 associé à un flasque 302. Ce flasque 302 présente l'intérêt d'un montage des diffuseurs sans excroissance extérieure au diffuseur.

Selon un exemple non limitatif, le diffuseur 301a, 301b présente :
- une chambre proximale s'étendant depuis l'entrée du diffuseur et en communication fluidique avec l'une des ouvertures 304a, 304b du corps de pulvérisation 100,
- une chambre distale s'étendant depuis la chambre proximale et jusqu'à l'ouïe 309a, 309b de sortie du flux d'air diffusé.

Au moins la chambre distale présente plusieurs canaux 308aa, 308ab, 308ac, 308ba, 308bb, 308bc, illustrés dans les figures 4 et 5, configurés pour séparer le flux d'air diffusé s'écoulant dans le diffuseur 301a, 301b en plusieurs parties de flux d'air diffusé, les canaux 308ab et 308bb étant orientés dans une direction convergente avec l'axe médian de pulvérisation 201. Ces canaux sont référencés aux figures 4 et 5. Chaque canal 308aa, 308ab, 308ac, 308ba, 308bb, 308bc forme une partie de flux d'air diffusé générée à une vitesse homogène de façon à limiter la formation de cisaillements d'air et de turbulences à la sortie des diffuseurs malgré les pertes de charges pour dévier la portion du flux d'air de rampe 350 issue du corps de pulvérisation 100 dans chaque diffuseur pour l'orienter vers la cible végétale. Les portions 308aa, 308ab, 308ac, 308ba, 308bb, 308bc, forment les portions 402a, 402b de flux d'air porteur. De préférence, les canaux génèrent des parties de flux d'air diffusé dans des directions non parallèles en sortie de chaque diffuseur et ont des formes allongées de sorte que le flux d'air diffusé issu de la chambre proximale est projeté en sortie du diffuseur pour former une lame d'air en éventail. Chaque partie de flux d'air diffusé peut être organisée dans des plans non parallèles de façon à former un flux d'air diffusé en sortie de diffuseur courbé vers l'axe médian de pulvérisation, la courbure étant vue dans un plan perpendiculaire à l'axe médian de pulvérisation. En l'absence de canaux, il y a en effet un risque d'obtenir un profil de vitesse d'air en sortie de diffuseur trop disparate générant des turbulences importantes dans la portion 402a, 402b de flux d'air porteur, de telles turbulences étant non souhaitées à ce stade.

Ainsi, la chambre distale présente un canal central et deux canaux périphériques qui s'étendent depuis la chambre proximale pour former des flux d'air diffusés porteurs sous la forme de lames d'air en éventail, planes ou courbes.

Chaque flux d'air diffusé se comporte ainsi comme une barrière de flux d'air au jet de produit. Compte tenu de la distance minimale de pulvérisation recommandée, les portions de collision générées par les flux d'air diffusés associées au jet de produit, issus des différentes sections de rampe d'une rampe, arrivent sur la cible végétale et sont à minima jointives pour balayer l'ensemble de la surface de la cible végétale.

Naturellement, il ressort clairement que toutes les caractéristiques relatives aux canaux peuvent être exploitées et revendiquées indépendamment des caractéristiques relatives aux flux d'air formant des portions de flux d'air qui intersectent l'axe médian de pulvérisation ainsi qu'aux caractéristiques relatives à l'axe de pivotement.

### Réglage du débit de flux d'air diffusé

Les figures 6A à 6C présentent un écorché partiel de la section de rampe 10 et montrent un dispositif de réglage du débit d'air 350 extrait vers les diffuseurs 301a, 301b, dans la portion tubulaire 103 du corps de pulvérisation 100.

Le corps de pulvérisation 100 comporte dans sa partie tubulaire 103 des portions de paroi 106a, 106b divisant la répartition du flux d'air de rampe 350 dans la partie tubulaire 103 en 3 portions 104a, 104b et 104c, la partie du flux d'air de rampe traversant les portions 104a, 104b étant orientées vers les ouvertures respectives 304a, 304b du corps de pulvérisation 100 et la partie du flux d'air de rampe 350 traversant la portion 104c se retrouvant en sortie de corps 352.

Alternativement le corps de pulvérisation 100 pourrait ne comporter qu'une seule paroi 106 divisant la répartition du flux d'air de rampe 350 en deux portions 104 et 104c, la portion 104 étant destinée à alimenter les deux ouvertures 304a, 304b du corps de pulvérisation 100, la portion 104c communiquant avec la sortie de corps 352.

Ce dispositif de réglage comporte au moins un volet 507 monté mobile à l'intérieur du corps de pulvérisation 100 et configuré pour faire varier, en fonction de sa position dans le corps de pulvérisation 100, la portion du flux d'air de rampe 350 traversant les portions 104a, 104b pour parvenir aux diffuseurs 301a, 301b. De préférence, le dispositif de réglage comprend deux volets, un pour chaque diffuseur 301a, 301b.

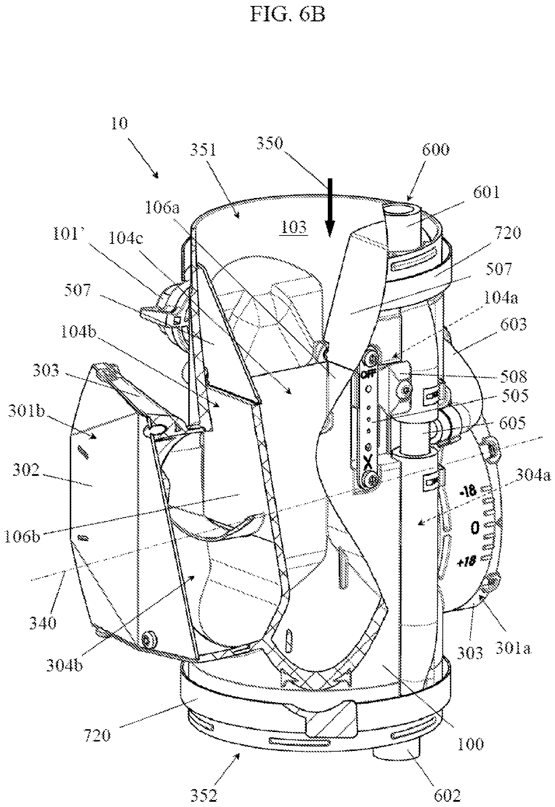

Chaque volet 507 admet :
- une position d'ouverture dans laquelle il canalise la majeure partie du flux d'air de rampe 350 vers les portions 104a, 104b du corps de pulvérisation 100 en limitant, voire en empêchant le passage du flux d'air de rampe 350 dans la portion 104c et donc vers des sections de rampe 10 situées en aval de la rampe 1. Cette position est illustrée en figure 6A. Dans cet exemple le volet 507 est éloigné de la face interne 103 du corps 100. Il autorise ainsi l'accès à une portion fixe 104a, 104b de canalisation menant aux ouvertures 304a, 304b ;
- une position d'obturation dans laquelle la majorité, voire la totalité du flux d'air de rampe 350 traverse la portion 104c et quasiment aucune partie de flux d'air de rampe ne traverse les portions 104a, 104b alimentant les diffuseurs 301a, 301b associés. Cette position est illustrée en figure 6B. Le volet 507 est plaqué contre la face interne 103 du corps de pulvérisation 100.

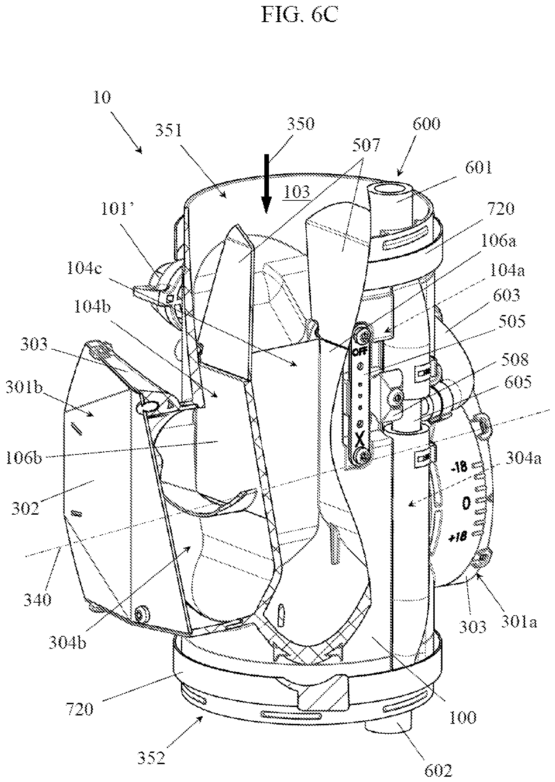

La figure 6C illustre une position intermédiaire du volet 507, autorisant une répartition équilibrée du flux d'air de rampe entre les diffuseurs 301a, 301b d'une part et une section de rampe 10 située en aval, alimentée alors par la portion du flux d'air de rampe 350 accédant à la portion 104c et arrivant en sortie de corps 352.

Ce dispositif de réglage permet ainsi, pour chaque section de rampe 10, de régler le débit d'air portant les gouttes vers la cible végétale. Il permet aussi de régler le débit en sortie des ouïes 309a, 309b des diffuseurs 301a, 301b de la rampe 1 malgré des pertes de charge différentes au niveau de chaque section de rampe 10 selon sa position dans la rampe 1 par rapport au ventilateur 3.

La position des volets 507 est commandée depuis l'extérieur de la section de rampe 10 sur le corps de pulvérisation 100 par un organe de réglage 508 manipulable par un utilisateur. Les volets mobiles sont par exemple reliés à cet organe de réglage 508 par des biellettes, non représentées sur les figures. Avantageusement, on prévoit que la position de cet organe 508 soit visualisable par rapport à une graduation 505 d'indice d'angle d'ouverture du volet 507. Typiquement, cette graduation 505 peut prendre la forme d'une règle graduée le long de laquelle glisse un bouton formant l'organe de réglage 508. De préférence, un unique organe de réglage 508 fait varier simultanément la position des volets 507 des diffuseurs 301a, 301b du corps de pulvérisation 100.

### Conduit d'alimentation en produit à pulvériser

La section de rampe 10 comprend un conduit principal 600 d'alimentation en produit à pulvériser. La buse 101 est alimentée en produit par un conduit de dérivation 603, fluidiquement connecté au conduit principal 600 par un raccord 605. Le conduit principal 600 présente une portion 601 amont située en amont de la connexion avec le conduit de dérivation 603 relativement à l'écoulement du produit dans la section 10 de rampe 1, et une portion 602 aval située en aval de cette connexion. Selon un exemple avantageux illustré aux figures 4 et 5, le conduit principal 600 est logé essentiellement à l'intérieur de la conduite d'air de la rampe et donc à l'intérieur des manchons 710, 711. De préférence, seule une portion du conduit principal 600 traverse la conduite d'air de la rampe au niveau du corps de pulvérisation 100 d'une section de rampe 10 de façon à alimenter la buse 101 par un conduit de dérivation 603. Cela permet de protéger le conduit principal 600 notamment des ultraviolets et d'éviter qu'il ne soit percuté ou arraché par des obstacles tels que des éléments de végétation rencontrés lors du déplacement de la rampe 1. Par exemple, on peut prévoir que la face externe du corps 100 présente un décrochement ou un logement 109, visible plus particulièrement à la figure 5, pour maintenir le conduit principal 600 à l'extérieur du corps de pulvérisation 100 tout en restant dans l'encombrement du corps de pulvérisation 100. Ce logement peut aussi être formé par une gaine, de section fermée ou non, située à l'intérieur du corps 100, et formant par exemple saillie sur la face interne 103 du corps 100. Ainsi, le conduit principal 600 ne forme pas saillie au-delà de la face externe du corps 100. Cela permet de réduire encore les risques d'accrochage et d'arrachage du conduit principal 600. De fait, le conduit principal 600 ne présente des jonctions qu'à l'extérieur de la conduite d'air et plus particulièrement à l'extérieur des corps de pulvérisation 100 des sections de rampe 10. Cela permet de faciliter l'accès au conduit de dérivation 603 et de vérifier d'éventuelles fuites dans les jonctions du conduit principal 600, notamment au niveau des raccords 605.

Alternativement, on peut prévoir que le conduit principal 600 soit fixé sur une face externe du corps de pulvérisation 100.

Le conduit principal 600 et le conduit de dérivation 603 peuvent être souples, c'est-à-dire qu'ils peuvent être déformés élastiquement par un effort manuel, par exemple pour les assembler dans la section 10 de la rampe 1.

Le conduit de dérivation 603 est relié au conduit principal 600 par une jonction externe à la paroi du corps 100 pour parvenir jusqu'à la buse 101, en l'occurrence le raccord 605 en forme de « T ». La connexion entre l'extrémité du conduit de dérivation 603 et la buse 101 peut être assurée par tout connecteur classique. De préférence, on prévoit un robinet purgeur anti gouttes 800 servant aussi de porte buse. Il relie ainsi le conduit de dérivation 603 à la buse tout en comportant des organes 604 servant à la fois de robinet, de dispositif de purge et de dispositif anti gouttes.

### Pivotement des diffuseurs

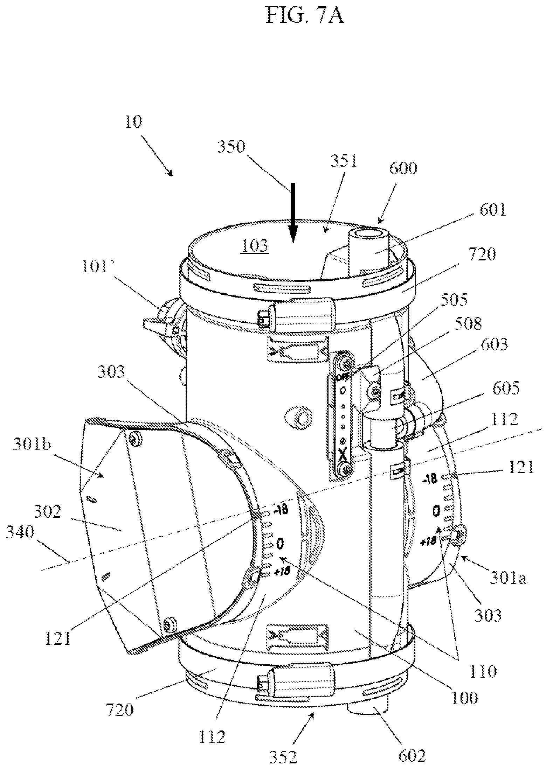

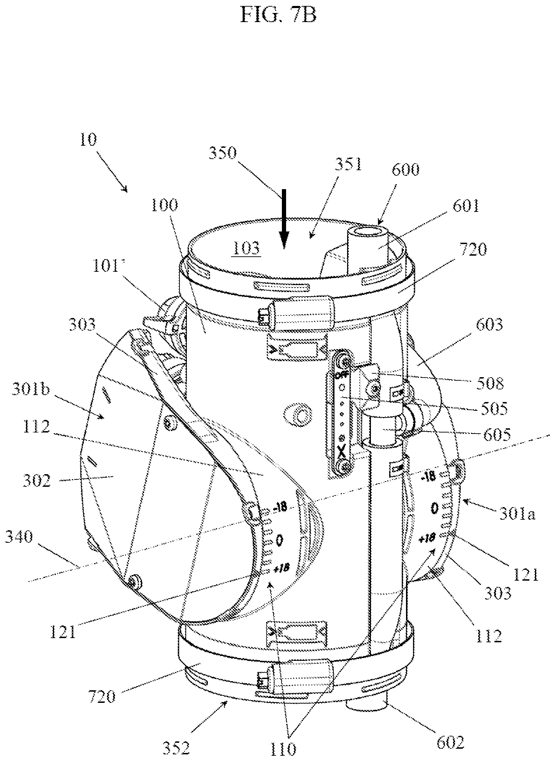

Selon un mode de réalisation avantageux illustré en figures 7A et 7B, les diffuseurs 301a, 301b sont montés mobiles en rotation sur le corps de pulvérisation 100. Ils sont par exemple montés pivotant sur une embase 112 formée par le corps de pulvérisation 100. Ce pivotement permet de régler la direction de propagation des flux d'air diffusés 400a, 400b en sortie de diffuseur pour l'adapter à la typologie de la cible végétale 5. De préférence, ce pivotement s'effectue autour d'un axe de pivotement 340, sensiblement perpendiculaire à la direction du flux d'air de rampe 350 traversant la section de rampe 1. Autrement, dit et comme cela ressort des explications ci-dessus et des figures, ce pivotement s'effectue autour d'un axe de pivotement 340, sensiblement perpendiculaire à la direction du flux d'air de rampe 350 traversant le corps de pulvérisation 100. Cet axe de pivotement 340 est sensiblement perpendiculaire à la direction selon laquelle s'étend le corps de pulvérisation 100 depuis son entrée 351 jusqu'à sa sortie 352.

Cela permet de privilégier une direction du flux d'air diffusé en sortie de diffuseur vers le pied ou vers le sommet de la cible végétale 5 en utilisation verticale d'une rampe le long d'une haie. De préférence, le secteur angulaire que peut balayer ce pivotement est compris entre -45° et +45° et plus préférentiellement entre -20° et +20°.

L'axe de pivotement 340 est configuré pour permettre une rotation des deux diffuseurs 301a, 301b de sorte que les flux d'air diffusés 400a, 400b balayent un secteur angulaire, ce secteur angulaire étant contenu dans un plan, de préférence un plan vertical.

Cet axe de pivotement 340 est de préférence parallèle à la direction d'avancement privilégiée 45 du pulvérisateur agricole 4.

Lorsque la section de rampe comprend un manchon 700, ce dernier s'étend selon une direction privilégiée qui est perpendiculaire à l'axe de pivotement.

Selon un exemple, le manchon 700 de liaison est relié au corps de pulvérisation 100, le flux d'air circulant d'une entrée de l'un du corps de pulvérisation 100 et du manchon 700 de liaison à une sortie de l'autre du corps 100 et du manchon de liaison 700 selon la direction de flux d'air de rampe 350.

De préférence, la buse 101 est solidaire des deux diffuseurs 301a, 301b dans leur rotation autour de cet axe. L'orientation angulaire de la buse 101 est asservie par celle des diffuseurs 301a, 301b. Ainsi, la direction relative du jet de produit 200 et des flux d'air diffusés 400a, 400b est conservée quelle que soit le pivotement angulaire imposé aux diffuseurs 301a, 301b. Pour cela, on peut prévoir que la buse 101 soit située à distance du corps de pulvérisation 100 de la section de rampe 10, sur une pièce de support 120 telle qu'une barrette rigide. Cette pièce de support 120 relie les deux diffuseurs 301a, 301b. Ainsi, un pivotement imposé à l'un des deux diffuseurs entraîne automatiquement un pivotement de même ampleur de l'autre diffuseur et de la buse 101.

L'axe de pivotement 340 est configuré pour permettre une rotation de l'élément de pulvérisation 101 de sorte que le jet de produit 200 s'incline dans un plan perpendiculaire à l'axe médian de pulvérisation 201 selon lequel se propage le jet de produit 200. L'axe de pivotement 340 est perpendiculaire à l'axe médian de pulvérisation 201 selon lequel se propage le jet de produit 200.

Ainsi, l'axe de pivotement 340 est configuré pour permettre une rotation de l'élément de pulvérisation 101 de sorte que l'axe médian de pulvérisation 201 balaye un secteur angulaire, ce secteur angulaire étant contenu dans un plan, de préférence un plan vertical. De préférence, ce plan vertical est perpendiculaire à la direction d'avancement privilégiée 45 du pulvérisateur agricole 4.

Afin de contrôler avec précision la position angulaire des diffuseurs 301a, 301b on prévoit que l'un parmi le corps 100 et l'ensemble mobile 120, 301a, 301b, 101 porte un repère angulaire 121 qui se déplace au droit d'une graduation 110 d'indice d'angle de rotation porté par l'autre parmi le corps 100 et l'ensemble mobile 120, 301a, 301b, 101.

Dans l'exemple illustré en figure 7A, l'orientation angulaire des diffuseurs correspond à un angle de -18° pour orienter les flux d'air diffusés et le jet de produit 200 en direction du bas de la cible végétale 5. Dans l'exemple illustré en figure 7B, l'orientation angulaire des diffuseurs correspond à un angle de +18° pour orienter les flux d'air diffusés et le jet de produit 200 en direction du haut de la cible végétale 5.

Naturellement, il ressort clairement que toutes les caractéristiques relatives à la rotation des diffuseurs 301a, 301b et/ou de l'élément de pulvérisation 101 peuvent être exploitées et revendiquées indépendamment des caractéristiques relatives aux flux d'air formant des portions de flux d'air qui intersectent l'axe médian de pulvérisation.

Cela permet de traiter avec précision une grande surface de végétaux tout en conservant un encombrement limité.

Outre le fait que l'on couvre avec précision la surface de végétation à traiter, on peut de fait configurer les directions de pulvérisation de chaque buse pour refléter, avec l'ensemble des buses d'une rampe, la géométrie de la haie végétale à traiter. Par exemple, la section de rampe proposée permet de traiter simultanément la face latérale, le dessous et le dessus d'une haie et ceci tout en s'adaptant à la hauteur de cette dernière.

### Structure de la rampe, rampe et pulvérisateur agricole

Comme indiqué ci-dessus, deux sections 10 de rampe 1 sont connectées entre elles par le manchon de liaison 710 de l'une des sections de rampe, de préférence souple ; et la première section de rampe est connectée au ventilateur par le manchon de raccordement 711, qui peut être souple lui aussi. Ainsi, la rampe n'est pas complètement rigide et peut se déformer aisément lorsqu'elle rencontre un obstacle. Typiquement, elle peut se déformer, au moins au niveau des manchons souples 710, 711 sous l'effet de son propre poids. Ainsi, elle peut s'adapter en permanence à la configuration du terrain et conserver une orientation sensiblement verticale malgré les déclivités du terrain.

Enfin, la rampe 1 de pulvérisation n'a pas besoin de structure support additionnelle pour supporter les sections de rampe 10, ces dernières formant la rampe 1 par une simple liaison entre elles au niveau de leur manchon de liaison 710 ou du manchon de raccordement 711. Ainsi, les sections de rampe 10 sont supportées uniquement par les manchons 710, 711.

La rampe comprend au moins une, et de préférence au moins deux, sections de rampe 10 reliées par leur manchon de liaison 710 et disposées en série de sorte qu'une partie du flux d'air diffusé alimentant une première section de rampe 10 la traverse pour alimenter une deuxième section de rampe 10 en aval de la rampe 1. Naturellement, il ressort clairement que toutes les caractéristiques relatives à la disposition en série des sections de rampe 10 ainsi que la disposition des ventilateurs peuvent être exploitées et revendiquées indépendamment des caractéristiques relatives aux flux d'air formant des portions de flux d'air qui intersectent l'axe médian de pulvérisation ainsi qu'aux caractéristiques relatives à l'axe de pivotement.

Chaque corps de pulvérisation 100 de section de rampe 10 est monté de manière amovible sur la rampe au moyen des colliers 720 et de l'interconnexion externe au corps de pulvérisation 100 du conduit principal 600. L'adaptation ensuite des longueurs de manchons 710, 711, associée à la longueur du conduit principal 600 permet d'adapter aisément la configuration de la rampe (par exemple le nombre et la disposition des sections de rampe sur une même rampe) en fonction de la cible végétale et de la quantité de traitement à pulvériser. En outre, en cas de défaillance d'une section de rampe, ses éléments la constituant peuvent être aisément remplacé sans avoir à changer l'intégralité de la rampe.

La paroi externe du corps 100 peut aussi comporter un logement ou un support pour y fixer une deuxième buse 101' qui peut être soit une buse de rechange, soit une buse de calibre différent voire même une buse de type différent (anti dérive par exemple) pour permettre un changement facile des buses 101 en cas de buse bouchée ou en passant d'un champ à un autre avec des conditions de traitement différentes. Par ailleurs, les évolutions de la législation imposent l'utilisation de buses particulières selon les circonstances, par exemple des buses anti dérive à proximité des habitations ou des cours d'eau. La prédisposition de ces buses au niveau même de la section de rampe facilite grandement le changement de buses et surtout permet de vérifier aisément si toutes les buses ont bien été alternées sur chaque section de rampe.

Le pulvérisateur agricole intégrant la rampe 1 peut être automoteur ou tracté. Il peut comprendre une rampe 1 ou plus, par exemple quatre comme celui illustré en figure 1. De préférence, chaque rampe 1 est connectée à un ventilateur 3 dont le débit d'air peut être réglé indépendamment de celui de l'autre rampe 1. Ainsi, on peut régler les paramètres débit/pression du flux d'air de rampe délivré dans chacune des rampes 1 de manière indépendante. Il est ensuite possible au sein de la rampe d'ajuster les flux d'air diffusés délivrés par les diffuseurs 301a, 301b de chacune des sections de rampes 10, par exemple en fonction de la position de la rampe par rapport à la cible végétale 5. Cela permet d'améliorer encore l'efficacité du dépôt du produit sur la cible végétale 5. Par ailleurs, par rapport à une solution comprenant un unique ventilateur alimentant plusieurs rampes, la solution proposée évite de générer des pertes de charge différentes vers chacune des rampes, compte tenu des longueurs et des formes de conduit nécessaires pour acheminer le flux d'air de rampe.

De préférence, en sortie 309a, 309b des diffuseurs 301a, 301b, la vitesse de chaque flux d'air diffusé permet d'acheminer très rapidement les gouttes de produit vers la cible végétale sans que celles-ci n'aient le temps de sécher entre leur diffusion et leur application. De préférence, les vitesses d'air en sortie 309 de diffuseur 301 sont de l'ordre de 40 à 50 m/s.

De préférence, la buse de pulvérisation 101 émet un jet de produit conçu pour s'évaser, au moins dans un plan comprenant l'axe médian de pulvérisation et la direction de flux d'air de rampe de la rampe. Cet évasement est compris dans une plage angulaire de l'ordre de 80 à 90 degrés. Compte tenu de la distance minimale de pulvérisation recommandée, cela conduit à balayer la cible végétale sur une largeur minimale définie par cette plage angulaire. Les portions de flux d'air porteurs sont configurées pour canaliser le jet de produit en ayant une largeur de flux d'air diffusé constamment supérieure à la largeur du jet de produit sur une position quelconque le long de l'axe médian de pulvérisation et dans un plan perpendiculaire à ce dernier. De fait, pour couvrir l'ensemble de la cible végétale, plusieurs buses 101 sont nécessairement réparties uniformément sur une même rampe 1. En pratique on positionne au moins deux buses et le plus souvent trois ou quatre, voire plus en fonction de la taille de la cible végétale 5.

De préférence, les sections de rampe 10 de la rampe 1 sont disposés de sorte que les différents jets portés couvrent au moins 60% de la hauteur du rang de haie 51, de préférence au moins 75% et de préférence sur toute la hauteur du rang de haie 51. L'ensemble de ces jets forment un pinceau de préférence continu qui balaye progressivement la cible végétale 5 en fonction de la vitesse d'avancement de la rampe relativement à la cible végétale 5. L'orientation angulaire des diffuseurs 301a, 301b permet d'ajuster la dimension du pinceau et donc la couverture de la cible végétale 5, ceci en fonction du nombre de sections 10 de rampe 1.

Le produit est acheminé sous pression au niveau de chaque section de rampe 10 pour y être micronisé sous la forme de gouttes, ensuite portées et dirigées vers la végétation par les flux d'air diffusés. Typiquement la pression du produit à l'intérieur du conduit principal est comprise entre 1 et 15 bars en fonction du type de buse utilisé.

Ainsi, la rampe 1 proposée présente une conception modulaire. Chaque section de rampe 10 comprend une entrée d'air et une sortie d'air, des capacités de réglage du débit ainsi que de l'orientation du flux d'air diffusé, chaque section de rampe 10 se reliant avec une autre section de rampe en amont ou en aval de la rampe par un manchon souple par exemple.

Dans ce mode de réalisation, le corps de pulvérisation 100 d'une section de rampe 10 forme une pièce monolithique. Selon un mode de réalisation alternatif illustré en figure 8, la rampe 1 ne présente qu'une seule section de rampe 10 comportant par contre plusieurs éléments de pulvérisation 301a, 301b, 101 tels que décrits ci-dessus. La section de rampe 10 comporte en outre un corps de pulvérisation 100a, 100b rigide, en deux parties longitudinales, formant la conduite d'air lors de leur assemblage. Ce mode de réalisation permet juste un montage plus aisé des ensembles de buses, diffuseurs ainsi que de la conduite principale, ces derniers éléments conservant les caractéristiques décrites ci-dessus. Ce mode de réalisation est plus adapté à une position horizontale ou inclinée des rampes de pulvérisation de façon à éviter ici les déformations excessives de la rampe dues à son propre poids.

Au regard de la description qui précède, il apparaît clairement que la solution proposée permet d'améliorer considérablement le dépôt de gouttes de produit sur une cible végétale, qu'il s'agisse d'une culture viticole, arboricole ou maraichère.

L'invention n'est pas limitée aux modes de réalisations précédemment décrits et s'étend à tous les modes de réalisation couverts par l'invention. La présente invention ne se limite pas aux exemples précédemment décrits. Bien d'autres variantes de réalisation sont possibles, par exemple par combinaison de caractéristiques précédemment décrites, sans sortir du cadre de l'invention. En outre, les caractéristiques décrites relativement à un aspect de l'invention peuvent être combinées à un autre aspect de l'invention.

En particulier, bien que sur les exemples illustrés la rampe de pulvérisation 1 s'étend principalement selon la verticale, l'invention couvre également les modes de réalisation dans lesquels la rampe de pulvérisation s'étend principalement selon une direction inclinée par rapport à la verticale. Cette direction peut notamment être horizontale.

Les flux de fluide sont préférentiellement des flux d'air quand bien même il est parfaitement envisageable qu'un autre gaz soit substitué à l'air.

## Revendications

1. Section (10) de rampe (1) de pulvérisation d'un produit sur une cible végétale (5), par exemple une vigne, la section (10) de rampe (1) comprenant :
- au moins un élément de pulvérisation (101), configuré pour être fluidiquement alimenté en produit et pour générer un jet de produit (200) se propageant vers la cible végétale (5) selon un axe médian de pulvérisation (201),
- deux diffuseurs (301a, 301b) configurés chacun pour être alimentés par un fluide gazeux tel que de l'air et configurés chacun pour générer en sortie de diffuseur (301a, 301b) un flux d'air diffusé (400a, 400b) se propageant vers la cible végétale (5) selon une direction de flux d'air diffusé, l'élément de pulvérisation étant situé entre les deux diffuseurs (301a, 301b),
**caractérisée en ce que**
la section (10) de rampe (1) comprend un corps de pulvérisation (100), les diffuseurs (301a), (301b) étant montés pivotant sur une embase (112) formée par le corps de pulvérisation (100), ce pivotement s'effectuant autour d'un axe de pivotement (340), sensiblement perpendiculaire à une direction du flux d'air de rampe (350) traversant la section (10) de rampe (1), la section (10) de rampe (1) étant configurée de sorte que chacun des flux d'air diffusé (400a, 400b) présente une première portion (402a, 402b) qui intersecte l'axe médian de pulvérisation (201), chacun des flux d'air diffusé (400a, 400b) présentant une deuxième portion (403a, 403b) prolongeant la première portion (402a, 402b) au-delà d'un point d'intersection avec l'axe médian de pulvérisation (201).

2. Section (10) de rampe (1) selon la revendication précédente, configurée de sorte que l'axe médian de pulvérisation (201) intersecte les flux d'air diffusé (400a, 400b) à une distance Db de l'élément de pulvérisation (101) inférieure ou égale à 0.8 mètre et de préférence inférieure ou égale à 0.4 mètre.

3. Section (10) de rampe (1) selon l'une quelconque des revendications précédentes, dans laquelle l'élément de pulvérisation et les diffuseurs (101, 301a, 301b) sont montés en rotation sur le corps (100) de sorte à être orientables autour dudit axe de pivotement (340), l'élément de pulvérisation et les diffuseurs (101, 301a, 301b) étant mutuellement solidaires en rotation autour de cet axe de pivotement (340).

4. Section (10) de rampe (1) selon l'une quelconque des revendications précédentes, dans laquelle le corps (100) comprend une pièce de support (120) s'étendant d'un diffuseur (301a, 301b) à l'autre et portant l'élément de pulvérisation (101).

5. Section (10) de rampe (1) selon l'une quelconque des revendications précédentes, configurée de sorte que chacun des flux d'air diffusé (400a, 400b) intersecte l'axe médian de pulvérisation (201) en deux zones jointives ou en une même zone, de préférence en un même point.

6. Section (10) de rampe (1) selon l'une quelconque des revendications précédentes, dans laquelle le corps de pulvérisation (100) forme une partie tubulaire (103) présentant au moins une entrée (351) et au moins une sortie (352) entre lesquelles circule un flux d'air de rampe (350) et au moins une ouverture d'alimentation (304a, 304b) des diffuseurs (301a, 301b) pour générer les flux d'air diffusés (400a, 400b).

7. Section (10) de rampe (1) selon la revendication précédente, dans laquelle le corps (100) est configuré pour supporter un conduit principal (600) d'alimentation de l'élément de pulvérisation (101) en produit, le corps de pulvérisation (100) étant configuré de sorte que le conduit principal (600) traverse au moins une entrée (351) et une sortie (352) du corps (100) ou soit logé à l'intérieur d'un logement (109) formé sur une face externe du corps (100).

8. Section (10) de rampe (1) selon l'une quelconque des revendications précédentes, dans laquelle au moins un diffuseur (301a, 301b) présente une extrémité proximale par laquelle il est monté en rotation sur le corps (100) et une extrémité distale formant au moins une ouïe de sortie (309a, 309b) pour le flux d'air diffusé, le diffuseur (301a, 301b) présente en outre un flasque externe (302), dont une paroi canalise en partie le flux d'air diffusé lors de son passage à l'intérieur du diffuseur (301a, 301b), le flasque externe (302) présentant de préférence une forme courbe tendant à rapprocher l'extrémité distale du corps (100).

9. Section (10) de rampe (1) selon l'une quelconque des revendications précédentes, dans laquelle le corps (100) comporte un dispositif de réglage du flux d'air diffusé en sortie de diffuseur(301a, 301b), le dispositif de réglage comportant au moins un volet (507) monté mobile à l'intérieur du corps (100) et configuré pour faire varier, en fonction de sa position dans le corps (100), la portion du flux d'air de rampe présente dans l'intérieur du corps (100) et qui parvient dans au moins un diffuseur (301a, 301b) par les ouvertures d'alimentation (304a, 304b).

10. Section (10) de rampe (1) selon l'une quelconque des revendications précédentes, comprenant au moins un manchon (700) de liaison relié au corps de pulvérisation (100) et configuré de sorte que le flux d'air de rampe circule d'une entrée de l'un du corps de pulvérisation (100) et du manchon (700) de liaison à une sortie de l'autre du corps (100) et du manchon de liaison (700) selon la direction de flux d'air de rampe (350).

11. Rampe (1) de pulvérisation comprenant au moins une section (10) de rampe (1) selon l'une quelconque des revendications précédentes, au moins une source en fluide pour générer le flux d'air de rampe et au moins un manchon de raccordement (711) pour relier fluidiquement la source à la au moins une section (10) de rampe (1), l'au moins un manchon (700) et l'au moins une section (10) de rampe (1) formant un conduit de circulation du flux d'air de rampe au sein de la rampe (1).

12. Rampe (1) selon la revendication précédente, dans laquelle la source en fluide est un ventilateur (3), de préférence le ventilateur (3) est monté à l'intérieur du conduit de circulation de la rampe (1).

13. Pulvérisateur agricole (4), automoteur ou tracté, équipé d'au moins une rampe (1) selon l'une quelconque des deux revendications précédentes.

14. Pulvérisateur agricole (4) selon la revendication précédente comprenant au moins deux rampes (1), chaque rampe (1) présentant un ventilateur (3) dont le débit d'air peut être réglé indépendamment de celui de l'autre rampe (1).

15. Pulvérisateur agricole (4) selon l'une quelconque des deux revendications précédentes, configuré de sorte que l'axe médian de pulvérisation (201) intersecte les flux d'air diffusés (400a, 400b) à une distance Db de l'élément de pulvérisation (101), avec Db ≤ Dr, Dr étant une distance de pulvérisation minimale recommandée par le constructeur, mesurée selon l'axe médian de pulvérisation (201) entre l'élément de pulvérisation (101) et la cible végétale (5).

## Patentansprüche

1. Abschnitt (10) eines Auslegers (1) zum Versprühen eines Produkts auf ein Pflanzenziel (5), beispielsweise eine Rebe, wobei der Abschnitt (10) des Auslegers (1) Folgendes umfasst:
- mindestens ein Sprühelement (101), das so eingerichtet ist, dass es fluidisch mit Produkt versorgt wird und einen Produktstrahl (200) erzeugt, der sich entlang einer mittleren Sprühachse (201) auf das Pflanzenziel (5) ausbreitet,
- zwei Diffusoren (301a, 301b), die jeweils so eingerichtet sind, dass sie mit einem gasförmigen Fluid wie Luft versorgt werden, und die jeweils so eingerichtet sind, dass sie am Ausgang des Diffusors (301a, 301b) einen diffusen Luftstrom (400a, 400b) erzeugen, der sich entlang einer Strömungsrichtung der diffusen Luft auf das Pflanzenziel (5) ausbreitet, wobei sich das Sprühelement zwischen den beiden Diffusoren (301a, 301b) befindet,
**dadurch gekennzeichnet, dass**
der Abschnitt (10) des Auslegers (1) einen Sprühkörper (100) umfasst, wobei die Diffusoren (301a), (301b) schwenkbar auf einem Fuß (112) montiert sind, der von dem Sprühkörper (100) gebildet wird, wobei diese Schwenkung um eine Schwenkachse (340) erfolgt, die im Wesentlichen senkrecht zu einer Richtung des Auslegerluftstroms (350) verläuft, der den Abschnitt (10) des Auslegers (1) durchquert, wobei der Abschnitt (10) des Auslegers (1) so eingerichtet ist, dass jeder der diffusen Luftströme (400a, 400b) einen ersten Abschnitt (402a, 402b) aufweist, der die mittlere Sprühachse (201) schneidet, wobei jeder der diffusen Luftströme (400a, 400b) einen zweiten Abschnitt (403a, 403b) aufweist, der den ersten Abschnitt (402a, 402b) über einen Schnittpunkt mit der mittleren Sprühachse (201) hinaus verlängert.

2. Abschnitt (10) eines Auslegers (1) nach dem vorhergehenden Anspruch, der so eingerichtet ist, dass die mittlere Sprühachse (201) die diffusen Luftströme (400a, 400b) in einem Abstand Db von dem Sprühelement (101) von kleiner oder gleich 0,8 Meter und vorzugsweise kleiner oder gleich 0,4 Meter schneidet.

3. Abschnitt (10) eines Auslegers (1) nach einem der vorhergehenden Ansprüche, wobei das Sprühelement und die Diffusoren (101, 301a, 301b) drehbar an dem Körper (100) montiert sind, so dass sie um die Schwenkachse (340) schwenkbar sind, wobei das Sprühelement und die Diffusoren (101, 301a, 301b) drehfest miteinander um diese Schwenkachse (340) verbunden sind.

4. Abschnitt (10) eines Auslegers (1) nach einem der vorhergehenden Ansprüche, wobei der Körper (100) ein Stützteil (120) umfasst, das sich von einem Diffusor (301a, 301b) zum anderen erstreckt und das Sprühelement (101) trägt.

5. Abschnitt (10) eines Auslegers (1) nach einem der vorhergehenden Ansprüche, der so eingerichtet ist, dass jeder der diffusen Luftströme (400a, 400b) die mittlere Sprühachse (201) in zwei zusammenhängenden Bereichen oder in einem gleichen Bereich, vorzugsweise an einem gleichen Punkt, schneidet.

6. Abschnitt (10) eines Auslegers (1) nach einem der vorhergehenden Ansprüche, wobei der Sprühkörper (100) einen röhrenförmigen Teil (103) bildet, der mindestens einen Eingang (351) und mindestens einen Ausgang (352), zwischen denen ein Auslegerluftstrom (350) zirkulieren, und mindestens eine Zufuhröffnung (304a, 304b) der Diffusoren (301a, 301b) zum Erzeugen der diffusen Luftströme (400a, 400b) aufweist.

7. Abschnitt (10) eines Auslegers (1) nach dem vorhergehenden Anspruch, wobei der Körper (100) so eingerichtet ist, dass er einen Hauptkanal (600) zur Versorgung des Sprühelements (101) mit Produkt aufnimmt, wobei der Sprühkörper (100) so eingerichtet ist, dass der Hauptkanal (600) mindestens einen Eingang (351) und einen Ausgang (352) des Körpers (100) durchquert oder in einem Gehäuse (109) sitzt, das an einer Außenseite des Körpers (100) gebildet ist.

8. Abschnitt (10) eines Auslegers (1) nach einem der vorhergehenden Ansprüche, wobei mindestens ein Diffusor (301a, 301b) ein proximales Ende aufweist, durch das er drehbar am Körper (100) montiert ist, und ein distales Ende, das mindestens eine Auslassöffnung (309a, 309b) für den diffusen Luftstrom bildet, wobei der Diffusor (301a, 301b) ferner einen äußeren Flansch (302) aufweist, dessen Wand den diffusen Luftstrom bei dem Durchströmen des Diffusors (301a, 301b) teilweise leitet, wobei der äußere Flansch (302) vorzugsweise eine gebogene Form aufweist, die dazu tendiert, sich dem distalen Ende des Körpers (100) anzunähern.

9. Abschnitt (10) eines Auslegers (1) nach einem der vorhergehenden Ansprüche, wobei der Körper (100) eine Vorrichtung zur Einstellung des am Ausgang des Diffusors (301a, 301b) verteilten Luftstroms aufweist, wobei die Einstellvorrichtung mindestens eine Klappe (507) aufweist, die beweglich in dem Inneren des Körpers (100) montiert und so eingerichtet ist, dass sie je nach ihrer Position in dem Körper (100) den Abschnitt des Auslegerluftstroms variiert, der in dem Inneren des Körpers (100) vorhanden ist und durch die Zufuhröffnungen (304a, 304b) in mindestens einen Diffusor (301a, 301b) gelangt.

10. Abschnitt (10) eines Auslegers (1) nach einem der vorhergehenden Ansprüche, umfassend mindestens eine Verbindungsmuffe (700), die mit dem Sprühkörper (100) verbunden und so eingerichtet ist, dass der Auslegerluftstrom von einem Eingang des einen des Sprühkörpers (100) und der Verbindungsmuffe (700) zu einem Ausgang des anderen des Körpers (100) und der Verbindungsmuffe (700) entlang der Richtung des Auslegerluftstroms (350) zirkuliert.

11. Sprühausleger (1), umfassend mindestens einen Abschnitt (10) des Auslegers (1) nach einem der vorhergehenden Ansprüche, mindestens eine Fluidquelle zur Erzeugung des Auslegerluftstroms und mindestens eine Anschlussmuffe (711) zur fluidischen Verbindung der Quelle mit dem mindestens einen Abschnitt (10) des Auslegers (1), wobei die mindestens eine Muffe (700) und der mindestens eine Abschnitt (10) des Auslegers (1) einen Zirkulationskanal für den Auslegerluftstrom innerhalb des Auslegers (1) bilden.

12. Ausleger (1) nach dem vorhergehenden Anspruch, wobei die Fluidquelle ein Lüfter (3) ist, vorzugsweise ist der Lüfter (3) innerhalb des Zirkulationskanals des Auslegers (1) montiert.

13. Landwirtschaftliches Sprühgerät (4), selbstfahrend oder gezogen, ausgestattet mit mindestens einem Ausleger (1) nach einem der beiden vorhergehenden Ansprüche.

14. Landwirtschaftliches Sprühgerät (4) nach dem vorhergehenden Anspruch, das mindestens zwei Ausleger (1) umfasst, wobei jeder Ausleger (1) einen Lüfter (3) aufweist, dessen Luftdurchsatz unabhängig von dem des anderen Auslegers (1) eingestellt werden kann.

15. Landwirtschaftliches Sprühgerät (4) nach einem der beiden vorhergehenden Ansprüche, das so eingerichtet ist, dass die mittlere Sprühachse (201) die diffusen Luftströme (400a, 400b) in einem Abstand Db von dem Sprühelement (101) schneidet, wobei Db ≤ Dr, wobei Dr ein von dem Hersteller empfohlener minimaler Sprühabstand ist, gemessen entlang der mittleren Sprühachse (201) zwischen dem Sprühelement (101) und dem Pflanzenziel (5).

## Claims

1. A section (10) of a boom (1) for spraying a product onto a plant target (5), for example a vine, the section (10) of the boom (1) comprising:
- at least one spraying element (101), which is configured to be fluidically supplied with product and to generate a jet of product (200) propagating towards the plant target (5) along a median spraying axis (201),
- two diffusers (301a, 301b) which are each configured to be supplied with a gaseous fluid such as air and are each configured to generate at the outlet of the diffuser (301a, 301b) a diffused air flow (400a, 400b) propagating towards the plant target (5) in a direction of diffused air flow, the spraying element being located between the two diffusers (301a, 301b),
**characterised in that**
the section (10) of the boom (1) comprises a spraying body (100), the diffusers (301a), (301b) being pivotably mounted on a base (112) formed by the spraying body (100), this pivoting being performed about a pivoting axis (340), substantially perpendicular to a direction of the boom air flow (350) passing through the section (10) of the boom (1), the section (10) of the boom (1) being configured such that each of the diffused air flows (400a, 400b) has a first portion (402a, 402b) which intersects the median spraying axis (201), each of the diffused air flows (400a, 400b) having a second portion (403a, 403b) extending the first portion (402a, 402b) beyond a point of intersection with the median spraying axis (201).

2. The section (10) of a boom (1) according to the preceding claim, configured such that the median spraying axis (201) intersects the diffused air flows (400a, 400b) at a distance Db from the spraying element (101) less than or equal to 0.8 metres and preferably less than or equal to 0.4 metres.

3. The section (10) of a boom (1) according to any of the preceding claims, wherein the spraying element and the diffusers (101, 301a, 301b) are rotatably mounted on the body (100) so as to be orientable about said pivoting axis (340), the spraying element and the diffusers (101, 301a, 301b) being mutually rotatably integral about this pivoting axis (340).

4. The section (10) of a boom (1) according to any of the preceding claims, wherein the body (100) comprises a support part (120) extending from one diffuser (301a, 301b) to the other and bearing the spraying element (101).

5. The section (10) of a boom (1) according to any of the preceding claims, configured such that each of the diffused air flows (400a, 400b) intersects the median spraying axis (201) in two contiguous zones or in the same zone, preferably at the same point.

6. The section (10) of a boom (1) according to any of the preceding claims, wherein the spraying body (100) forms a tubular part (103) having at least one inlet (351) and at least one outlet (352) between which a boom air flow (350) flows and at least one opening (304a, 304b) for supplying the diffusers (301a, 301b) to generate the diffused air flows (400a, 400b).

7. The section (10) of a boom (1) according to the preceding claim, wherein the body (100) is configured to support a main pipe (600) for supplying the spraying element (101) with product, the spraying body (100) being configured such that the main pipe (600) passes through at least one inlet (351) and an outlet (352) of the body (100) or is housed inside a housing (109) formed on an outer face of the body (100).

8. The section (10) of a boom (1) according to any of the preceding claims, wherein at least one diffuser (301a, 301b) has a proximal end whereby it is rotatably mounted on the body (100) and a distal end forming at least one outlet port (309a, 309b) for the diffused air flow, the diffuser (301a, 301b) further has an outer flange (302), a wall of which partially channels the diffused air flow during its passage inside the diffuser (301a, 301b), the outer flange (302) preferably having a curved shape tending to move the distal end closer to the body (100).

9. The section (10) of a boom (1) according to any of the preceding claims, wherein the body (100) comprises a device for adjusting the air flow diffused at the outlet of the diffuser (301a, 301b), the adjustment device comprising at least one flap (507) movably mounted inside the body (100) and configured to vary, according to its position in the body (100), the portion of the boom air flow present inside the body (100) and which arrives in at least one diffuser (301a, 301b) via the supply openings (304a, 304b).

10. The section (10) of a boom (1) according to any of the preceding claims, comprising at least one connecting sleeve (700) connected to the spraying body (100) and configured such that the boom air flow flows from an inlet of one of the spray body (100) and the connecting sleeve (700) to an outlet of the other of the body (100) and the connecting sleeve (700) in the boom air flow direction (350).

11. A spray boom (1) comprising at least one section (10) of the boom (1) according to any of the preceding claims, at least one fluid source for generating the boom air flow and at least one connecting sleeve (711) for fluidically connecting the source to the at least one section (10) of the boom (1), the at least one sleeve (700) and the at least one section (10) of the boom (1) forming a pipe for circulating the boom air flow within the boom (1).

12. The boom (1) according to the preceding claim, wherein the fluid source is a fan (3), preferably the fan (3) is mounted inside the circulation pipe of the boom (1).

13. An agricultural sprayer (4), self-propelled or towed, equipped with at least one boom (1) according to any of the two preceding claims.

14. The agricultural sprayer (4) according to the preceding claim comprising at least two booms (1), each boom (1) having a fan (3), the air flow rate of which can be adjusted independently from that of the other boom (1).

15. The agricultural sprayer (4) according to any of the two preceding claims, configured such that the median spraying axis (201) intersects the diffused air flows (400a, 400b) at a distance Db from the spraying element (101), where Db ≤ Dr, Dr is a minimum spraying distance recommended by the manufacturer, measured along the median spraying axis (201) between the spraying element (101) and the plant target (5).
